# EUROPEAN PATENT SPECIFICATION

(11) **EP 3 543 276 B1**
(45) Date of publication and mention of the grant of the patent: **08.03.2023**
(21) Application number: 17872621.2
(22) Date of filing: 25.09.2017
(51) Int. Cl.: C08G 63/193, C08G 63/181, G03G 5/05, G03G 5/06, G03G 5/147, C08G 63/185, C08G 63/189

(54) **POLYARYLATE RESIN AND ELECTROPHOTOGRAPHIC PHOTOSENSITIVE MEMBER**
POLYARYLATHARZ UND ELEKTROPHOTOGRAFISCHES LICHTEMPFINDLICHES ELEMENT
RÉSINE DE POLYARYLATE ET ÉLÉMENT PHOTOSENSIBLE ÉLECTROPHOTOGRAPHIQUE

(30) Priority: 18.11.2016 JP 2016225158
(43) Date of publication of application: 25.09.2019
(73) Proprietor: Kyocera Document Solutions Inc., Osaka-shi, Osaka 540-8585 (JP)
(72) Inventor: AZUMA, Jun, Osaka-shi Osaka 540-8585 (JP); KITAGUCHI, Kenji, Osaka-shi Osaka 540-8585 (JP)
(74) Representative: Viering, Jentschura & Partner mbB Patent- und Rechtsanwälte
(86) International application number: PCT/JP2017/034467
(87) International publication number: WO 2018/092418

(56) References cited:
- EP-A1- 2 949 686
- WO-A1-2008/018467
- WO-A1-2014/115694
- WO-A1-2017/073549
- WO-A1-2017/142004
- JP-A- S59 133 221
- JP-A- 2010 189 629
- JP-A- 2015 163 948
- JP-A- 2017 145 368
- JP-A- 2017 146 548
- JP-A- 2017 149 940
- JP-A- 2017 151 425
- US-A1- 2007 088 094
- US-A1- 2015 220 007

## Description

### [TECHNICAL FIELD]

The present invention relates to an electrophotographic photosensitive member.

### [BACKGROUND ART]

An electrophotographic image forming apparatus (for example, a printer or a multifunction peripheral) includes an electrophotographic photosensitive member as an image bearing member. The electrophotographic photosensitive member includes a photosensitive layer. Examples of the electrophotographic photosensitive member include a single-layer electrophotographic photosensitive member and a multi-layer electrophotographic photosensitive member. The single-layer electrophotographic photosensitive member includes a photosensitive layer having a charge generating function and a charge transporting function. The multi-layer electrophotographic photosensitive member includes a photosensitive layer including a charge generating layer having a charge generating function and a charge transport layer having a charge transporting function.

Patent Literature 1 discloses a polyarylate resin including a repeating unit represented by chemical formula (Resin-B3) shown below. It also discloses an electrophotographic photosensitive member containing the polyarylate resin. 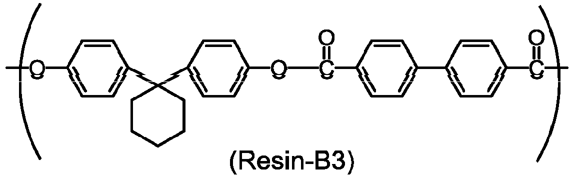 Patent Literature 2 relates to an electrophotographic photosensitive member, a process cartridge, and an electrophotographic apparatus. As part of the product, a polyester having the structure (1) disclosed in paragraph [0012] is used, with Z being a substituted cycloalkylidene group with a 5- to 8-membered ring. [CITATION LIST]

### [Patent Literature]

### [Patent Literature 1]

Japanese Patent Application Laid-Open Publication No. 2001-265021 [Patent Literature 2]

US 2015/220007 A1

### [SUMMARY OF INVENTION]

### [Technical Problem]

However, although the polyarylate resin disclosed in Patent Literature 1 has solubility in a solvent of an application liquid for photosensitive layer formation, a photosensitive member containing the polyarylate resin cannot exhibit abrasion resistance to a level sufficient for high-speed image forming apparatuses.

The present invention has been made in view of the foregoing and has its object of providing an electrophotographic photosensitive member including a photosensitive layer having excellent abrasion resistance.

### [Solution to Problem]

A photosensitive member according to the present invention includes a conducive substrate and a photosensitive layer. The photosensitive layer contains a charge generating material, a hole transport material, and a binder resin. The binder resin includes a polyarylate resin represented by a general formula (1) shown below.

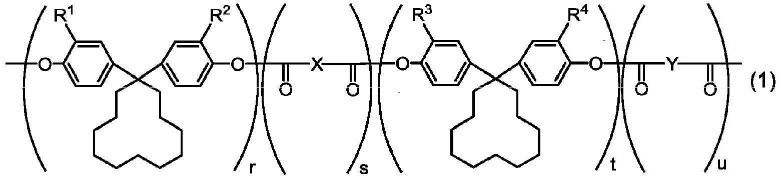

In the general formula (1), R¹, R², R³, and R⁴ each represent, independently of one another, a hydrogen atom or a methyl group. r and s each represent an integer of at least 0 and no greater than 49. t and u each represent an integer of at least 1 and no greater than 50. r + s + t + u = 100. r + t = s + u. r and t may be the same as or different from each other. s and u may be the same as or different from each other. X represents a divalent group represented by chemical formula (2A), chemical formula (2B), chemical formula (2C), or chemical formula (2D) shown below. Y represents a divalent group represented by chemical formula (4A), chemical formula (4B), or chemical formula (4C) shown below. X and Y are different from each other.

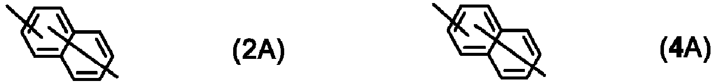

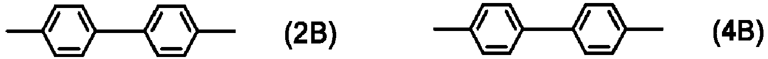

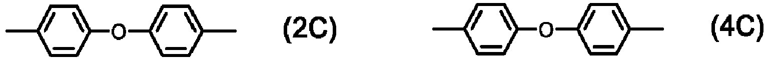

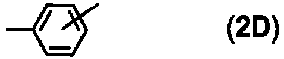

### [Advantageous Effects of Invention]

The electrophotographic photosensitive member according to the present invention is excellent in abrasion resistance.

### [BRIEF DESCRIPTION OF DRAWINGS]

[FIG 1A]

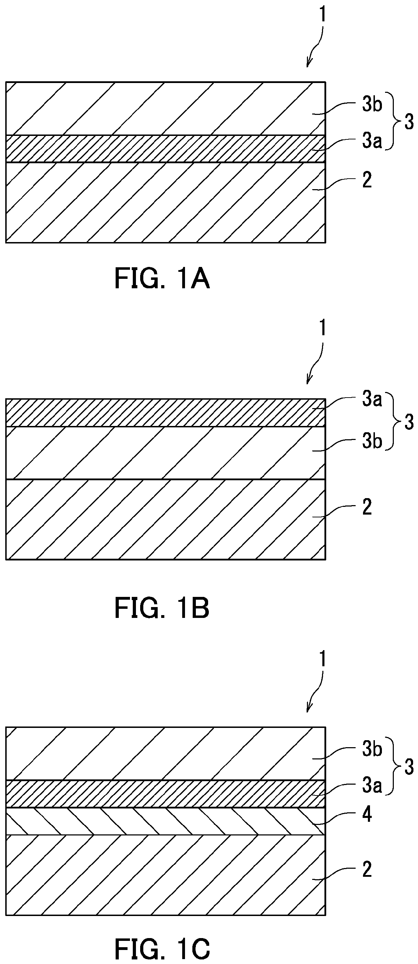

   FIG. 1A is a schematic cross-sectional view of an example of a structure of an electrophotographic photosensitive member according to an embodiment of the present invention.
[FIG 1B]
   FIG. 1B is a schematic cross-sectional view of an example of the structure of the electrophotographic photosensitive member according to the embodiment of the present invention.
[FIG 1C]
   FIG. 1C is a schematic cross-sectional view of an example of the structure of the electrophotographic photosensitive member according to the embodiment of the present invention.
[FIG 2A]

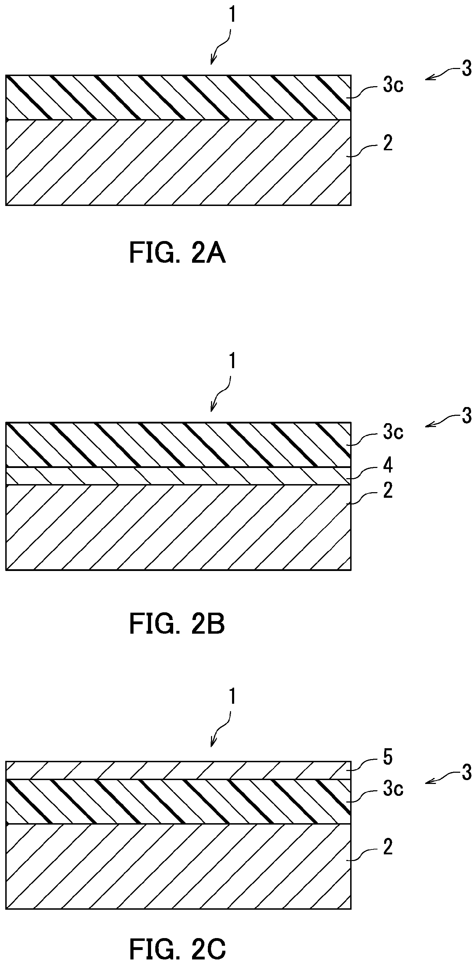

   FIG. 2A is a schematic cross-sectional view of an example of another structure of the electrophotographic photosensitive member according to the embodiment of the present invention.
[FIG 2B]
   FIG. 2B is a schematic cross-sectional view of an example of the other structure of the electrophotographic photosensitive member according to the embodiment of the present invention.
[FIG 2C]
   FIG. 2C is a schematic cross sectional view of an example of the other structure of the electrophotographic photosensitive member according to the embodiment of the present invention.
[FIG 3]

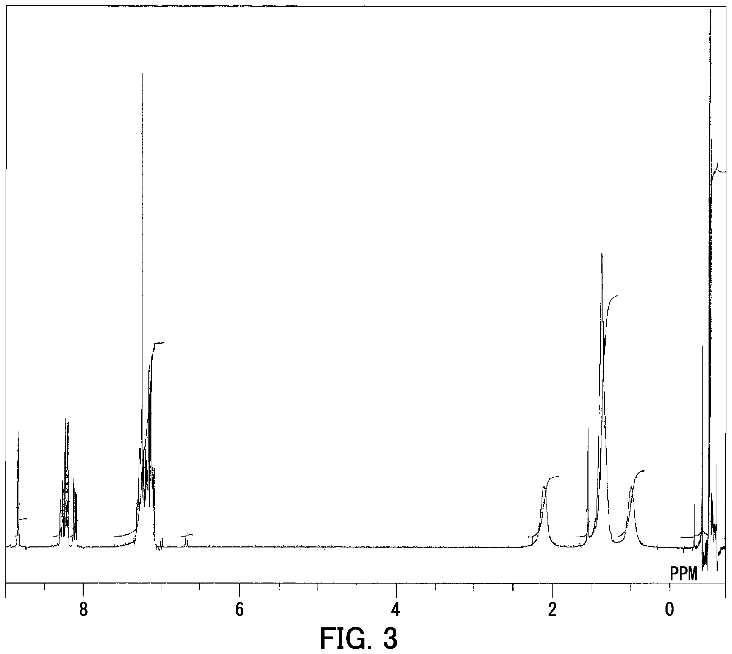

   FIG. 3 is a ¹H-NMR spectrum of a polyarylate resin represented by chemical formula (Resin-1).

### [DESCRIPTION OF EMBODIMENTS]

The following describes embodiments of the present invention in detail, but the present invention is not in any way limited by the embodiments described below and appropriate variations may be made in practice within the intended scope of the present invention. Although explanation is omitted as appropriate in order to avoid repetition, such omission does not limit the essence of the present invention. In the following description, the term "-based" may be appended to the name of a chemical compound to form a generic name encompassing both the chemical compound itself and derivatives thereof. Also, when the term "-based" is appended to the name of a chemical compound used in the name of a polymer, the term indicates that a repeating unit of the polymer originates from the chemical compound or a derivative thereof.

Hereinafter, an alkyl group having a carbon number of at least 1 and no greater than 8, an alkyl group having a carbon number of at least 1 and no greater than 6, an alkyl group having a carbon number of at least 1 and no greater than 4, an alkoxy group having a carbon number of at least 1 and no greater than 8, an alkoxy group having a carbon number of at least 1 and no greater than 4, and a cycloalkane having a carbon number of at least 5 and no greater than 7 each refer to the following.

The alkyl group having a carbon number of at least 1 and no greater than 8 is an unsubstituted straight chain or branched chain alkyl group. Examples of the alkyl group having a carbon number of at least 1 and no greater than 8 include a methyl group, an ethyl group, a propyl group, an isopropyl group, an n-butyl group, an s-butyl group, a t-butyl group, a pentyl group, an isopentyl group, a neopentyl group, a hexyl group, heptyl group, and an octyl group.

The alkyl group having a carbon number of at least 1 and no greater than 6 is an unsubstituted straight chain or branched chain alkyl group. Examples of the alkyl group having a carbon number of at least 1 and no greater than 6 include a methyl group, an ethyl group, a propyl group, an isopropyl group, an n-butyl group, an s-butyl group, a t-butyl group, a pentyl group, an isopentyl group, a neopentyl group, and a hexyl group.

The alkyl group having a carbon number of at least 1 and no greater than 4 is an unsubstituted straight chain or branched chain alkyl group. Examples of the alkyl group having a carbon number of at least 1 and no greater than 4 include a methyl group, an ethyl group, a propyl group, an isopropyl group, an n-butyl group, s-butyl group, and a t-butyl group.

The alkoxy group having a carbon number of at least 1 and no greater than 8 is an unsubstituted straight chain or branched chain alkoxy group. Examples of the alkoxy group having a carbon number of at least 1 and no greater than 8 include a methoxy group, an ethoxy group, an n-propoxy group, an isopropoxy group, an n-butoxy group, an s-butoxy group, a t-butoxy group, a pentyloxy group, an isopentyloxy group, a neopentyloxy group, a hexyloxy group, a heptyloxy group, and an octyloxy group.

The alkoxy group having a carbon number of at least 1 and no greater than 4 is an unsubstituted straight chain or branched chain alkoxy group. Examples of the alkoxy group having a carbon number of at least 1 and no greater than 4 include a methoxy group, an ethoxy group, an n-propoxy group, an isopropoxy group, an n-butoxy group, an s-butoxy group, and a t-butoxy group.

The cycloalkane having a carbon number of at least 5 and no greater than 7 is an unsubstituted cycloalkane. Examples of the cycloalkane having a carbon number of at least 5 and no greater than 7 include cyclopentane, cyclohexane, and cycloheptane.

### <Polyarylate Resin>

A polyarylate resin contained in the photosensitive layer of the photosensitive member according to a embodiment of the present invention is represented by general formula (1) shown below. In the following, the polyarylate resin as described above may be referred to as a polyarylate resin (1).

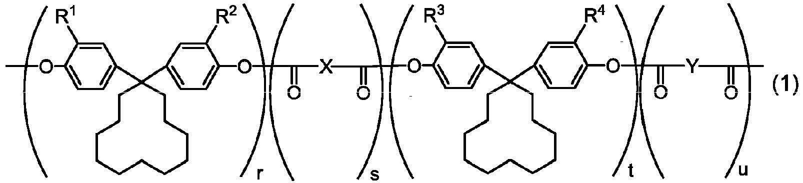

In the general formula (1), R¹, R², R³, and R⁴ each represent, independently of one another, a hydrogen atom or a methyl group. r and s each represent an integer of at least 0 and no greater than 49. t and u each represent an integer of at least 1 and no greater than 50. r + s + t + u = 100. r + t = s + u. r and t may be the same as or different from each other. s and u may be the same as or different from each other. X represents a divalent group represented by chemical formula (2A), chemical formula (2B), chemical formula (2C), or chemical formula (2D) shown below. Y represents a divalent group represented by chemical formula (4A), chemical formula (4B), or chemical formula (4C) shown below. X and Y are different from each other.

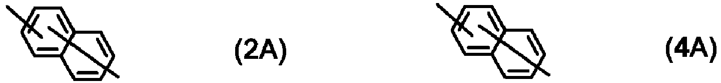

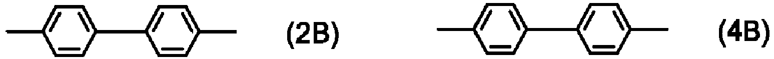

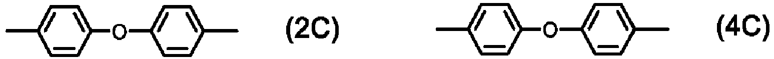

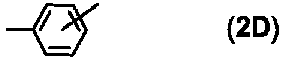

In terms of further improving abrasion resistance of a photosensitive member, s in general formula (1) preferably represents an integer of at least 1. More preferably, in general formula (1), s represents an integer of at least 1 and X represents a divalent group represented by chemical formula (2A) or Y represents a divalent group represented by chemical formula (4A).

The polyarylate resin (1) includes a repeating unit having a mole fraction of r/(r + t) and represented by general formula (1-5) (also referred to below as a repeating unit (1-5)), a repeating unit having a mole fraction of s/(s + u) and represented by general formula (1-6) (also referred to below as a repeating unit (1-6)), a repeating unit having a mole fraction of t/(r + t) and represented by general formula (1-7) (also referred to below as a repeating unit (1-7)), and a repeating unit having a mole fraction of u/(s + u) and represented by general formula (1-8) (also referred to below as a repeating unit (1-8)). The mole fraction will be described later.

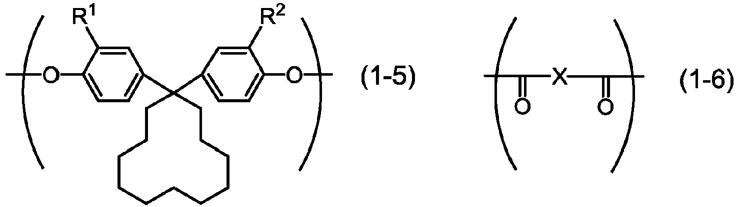

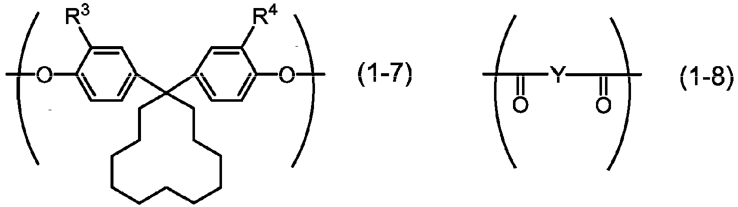

R¹ and R² in general formula (1-5), X in general formula (1-6), R³ and R⁴ in general formula (1-7), and Y in general formula (1-8) are the same as defined for R¹, R², X, R³, R⁴, and Y in general formula (1), respectively.

The polyarylate resin (1) may include a repeating unit that is not the repeating units (1-5) to (1-8). A ratio (mole fraction) of a sum of amounts by mole of the repeating units (1-5) to (1-8) to a total amount by mole of repeating units included in the polyarylate resin (1) is preferably at least 0.80, more preferably at least 0.90, and further preferably 1.00.

No specific limitations are placed on the sequence of the repeating units (1-5) to (1-8) in the polyarylate resin (1) so long as a repeating unit derived from an aromatic diol and a repeating unit derived from an aromatic dicarboxylic acid are adjacent to one another. For example, the repeating unit (1-5) is adjacent to and bonded to the repeating unit (1-6) or the repeating unit (1-8). Similarly, the repeating unit (1-7) is adjacent to and bonded to the repeating unit (1-6) or the repeating unit (1-8). The polyarylate resin (1) may include a repeating unit that is not the repeating units (1-5) to (1-8).

In general formula (1), r and s each represent an integer of at least 0 and no greater than 49, and t and u each represent an integer of at least 1 and no greater than 50. r + s + t + u = 100. r + t = s + u. In terms of improving abrasion resistance and solvent solubility of a photosensitive member and solvent dispersibility of an application liquid for photosensitive layer formation, s/(s + u) is preferably at least 0.30 and no greater than 0.70. s/(s + u) represents a ratio (mole fraction) of an amount by mole of the repeating unit (1-6) to a sum of the amount by mole of the repeating unit (1-6) and an amount by mole of the repeating unit (1-8) in the polyarylate resin (1). When s/(s + u) is at least 0.30 and no greater than 0.70, abrasion resistance of a photosensitive member is improved and a liquid life of an application liquid for photosensitive layer formation is prolonged.

In terms of improving abrasion resistance of a photosensitive layer, a viscosity average molecular weight of the polyarylate resin (1) is preferably at least 10,000, more preferably greater than 20,000, further preferably greater than 30,000, and particularly preferably greater than 45,000. When the polyarylate resin (1) has a viscosity average molecular weight of at least 10,000, abrasion resistance of the binder resin is increased and a charge transport layer hardly abrades. By contrast, the viscosity average molecular weight of the polyarylate resin (1) is preferably no greater than 80,000, and more preferably no greater than 56,000. When the polyarylate resin (1) has a viscosity average molecular weight of no greater than 80,000, the polyarylate resin (1) readily dissolves in a solvent in charge transport layer formation, thereby tending to facilitate charge transport layer formation.

Examples of the polyarylate resin (1) include polyarylate resins represented by chemical formulas (Resin-1) to (Resin-10) (also referred to below as polyarylate resins (Resin-1) to (Resin-10), respectively).

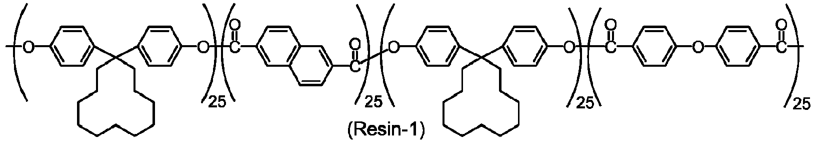

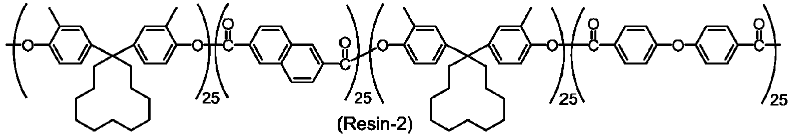

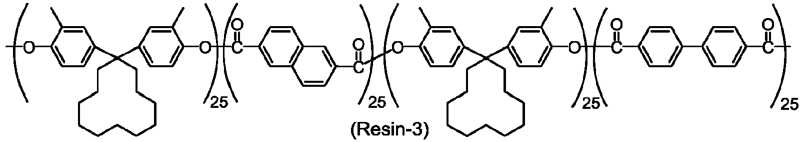

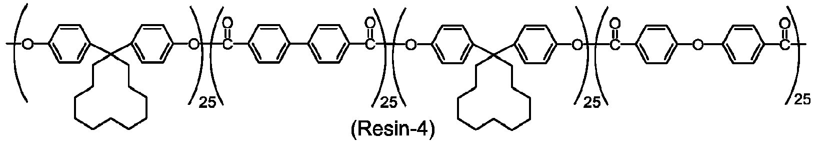

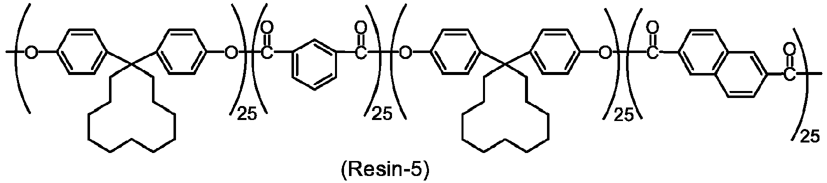

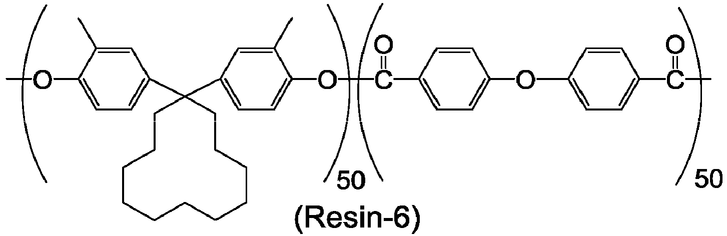

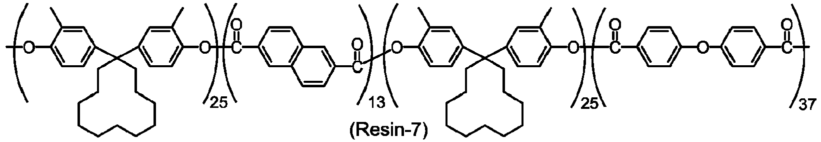

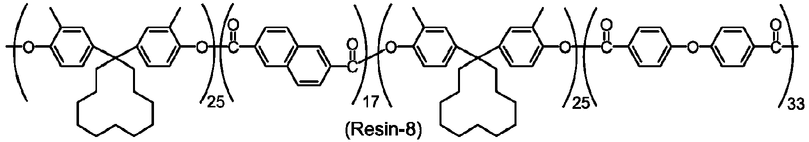

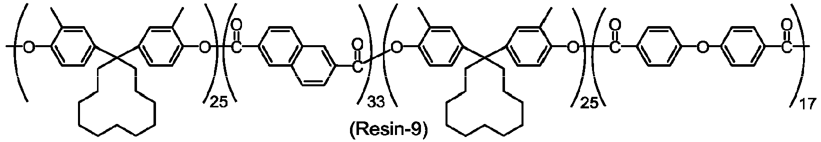

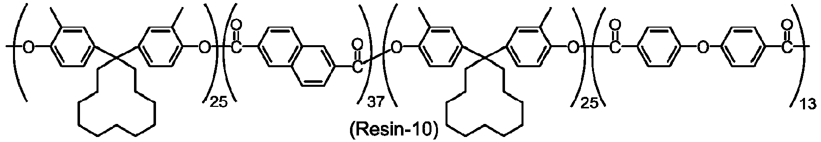

Among the polyarylate resins (Resin-1) to (Resin-10), the polyarylate resins (Resin-1) to (Resin-3) and (Resin-5) are preferable in terms of improving abrasion resistance of a photosensitive member. The polyarylate resin (Resin-1) and (Resin-2) are further preferable.

### (Polyarylate Resin Production Method)

No specific limitations are placed on a production method of a binder resin (1) so long as the polyarylate resin (1) can be produced. Examples of such production methods include condensation polymerization of aromatic diols and aromatic dicarboxylic acids for forming the repeating units included in the polyarylate resin (1). No specific limitations are placed on a synthesis method of the polyarylate resin (1), and any known synthesis method (specific examples include solution polymerization, melt polymerization, and interface polymerization) can be employed. The following describes an example of the production method of the polyarylate resin (1).

The polyarylate resin (1) is produced for example in accordance with a reaction represented by chemical equation (R-1) (also referred to below as a reaction (R-1)) or a method conforming therewith. The production method of the polyarylate resin (1) involves for example reaction (R-1).

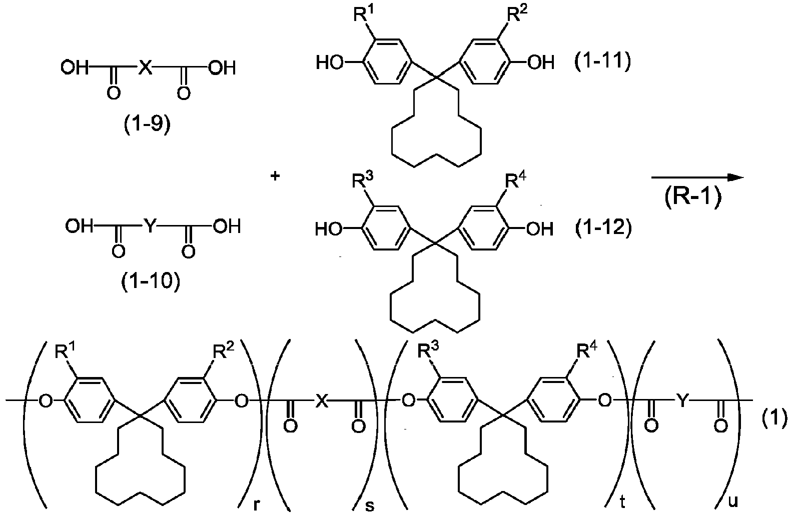

In reaction (R-1), R¹ and R² in general formula (1-11), R³ and R⁴ in general formula (1-12), X in general formula (1-9), and Y in general formula (1-10) are the same as defined for R¹, R², R³, R⁴, X, and Y in general formula (1), respectively.

In reaction (R-1), a combination of an aromatic dicarboxylic acid represented by general formula (1-9) and an aromatic dicarboxylic acid represented by general formula (1-10) (also referred to below as aromatic dicarboxylic acids (1-9) and (1-10), respectively) and a combination of an aromatic diol represented by general formula (1-11) and an aromatic diol represented by general formula (1-12) (also referred to below as aromatic diols (1-11) and (1-12), respectively) are reacted to yield the polyarylate resin (1).

Examples of the aromatic dicarboxylic acid (1-9) include 4,4'-dicarboxydiphenyl ether, 4,4'-dicarboxybiphenyl, terephthalic acid, isophthalic acid, and 2,6-naphthalene dicarboxylic acid. Examples of the aromatic dicarboxylic acid (1-10) include 4,4'-dicarboxydiphenyl ether, 4,4'-dicarboxybiphenyl, and 2,6-naphthalene dicarboxylic acid. In reaction (R-1), another aromatic dicarboxylic acid may be used in addition to the aromatic dicarboxylic acids (1-9) and (1-10). Note that an aromatic dicarboxylic acid derivative can be used instead of either or both of the aromatic dicarboxylic acids in reaction (R-1). Examples of the aromatic dicarboxylic acid derivative include acid anhydrides and halogenated alkanoyls of the aromatic dicarboxylic acids (1-9) and (1-10).

Examples of the aromatic diols (1-11) and (1-12) include 1,1-bis(4-hydroxy-3-methylphenyl)cyclododecane and 1,1-bis(4-hydroxyphenyl)cyclododecane. In reaction (R-1), an additional aromatic diol may be used in addition to the aromatic diols (1-11) and (1-12). Examples of the additional aromatic diol include bisphenol A, bisphenol S, bisphenol E, and bisphenol F. Note that an aromatic diol derivative can be used instead of either or both of the aromatic diols in reaction (R-1). An example of the aromatic diol derivative is diacetate.

A sum of an amount by mole of the aromatic diol (1-11) and an amount by mole of the aromatic diol (1-12) is preferably at least 0.9 and no greater than 1.1 relative to 1 mol of a sum of an amount by mole of the aromatic dicarboxylic acid (1-9) and an amount by mol of the aromatic dicarboxylic acid (1-10). It is because refinement of the polyarylate resin (1) is facilitated and percentage yield of the polyarylate resin (1) is increased within the above range.

Reaction (R-1) may be allowed to proceed in the presence of an alkali and a catalyst. Examples of the catalyst include tertiary ammoniums (specific examples include trialkylamines) and quaternary ammonium salts (specific examples include benzyltriethylammonium bromide). Examples of the alkali include hydroxides of alkali metals (specific examples include sodium hydroxide and potassium hydroxide), hydroxides of alkali earth metals (specific examples include calcium hydroxide). Reaction (R-1) may be allowed to proceed in a solvent and in an inert gas atmosphere. Examples of the solvent include water and chloroform. An example of the inert gas is argon. Reaction (R-1) preferably has a reaction time of at least 2 hours and no greater than 5 hours. Reaction temperature is preferably 5°C or higher and 25°C or lower.

Another process (for example, a refining process) may be included as needed in production of the polyarylate resin (1). Examples of such processes include a refining process. Examples of refining methods include known methods (specific examples include filtering, chromatography, and crystallization).

### <Electrophotographic Photosensitive Member>

An electrophotographic photosensitive member according to the embodiment of the present invention (also referred to below as a photosensitive member) includes a conductive substrate and a photosensitive layer. Examples of the photosensitive member include a multi-layer electrophotographic photosensitive member (also referred to below as a multi-layer photosensitive member) and a single-layer electrophotographic photosensitive member (also referred to below as a single-layer photosensitive member).

The multi-layer photosensitive member includes as a photosensitive layer a charge generating layer and a charge transport layer. The following describes a structure of a multi-layer photosensitive member 1 that is an example of the photosensitive member according to the embodiment with reference to FIGS. 1A to 1C. FIGS. 1A to 1C each are a schematic cross-sectional view of an example of the structure of the photosensitive member according to the embodiment. As illustrated in FIG 1A, the multi-layer photosensitive member 1 includes a conductive substrate 2 and a photosensitive layer 3. The photosensitive layer 3 includes a charge generating layer 3a and a charge transport layer 3b. As illustrated in FIG. 1A, the multi-layer photosensitive member 1 may include the charge generating layer 3a disposed on the conductive substrate 2 and further include the charge transport layer 3b disposed on the charge generating layer 3a. Alternatively, as illustrated in FIG 1B, the multi-layer photosensitive member 1 may include the charge transport layer 3b disposed on the conductive substrate 2 and further include the charge generating layer 3a disposed on the charge transport layer 3b. As illustrated in FIG 1A, the charge transport layer 3b may be disposed as an outermost surface layer of the multi-layer photosensitive member 1. The charge transport layer 3b may be a one layer (single layer).

As illustrated in FIG 1A, the photosensitive layer 3 may be disposed directly on the conductive substrate 2. Alternatively, as illustrated in FIG 1C, the multi-layer photosensitive member 1 includes for example the conductive substrate 2, an intermediate layer 4 (undercoat layer), and the photosensitive layer 3. As illustrated in FIG 1C, the photosensitive layer 3 may be disposed indirectly on the conductive substrate 2. As illustrated in FIG 1C, the intermediate layer 4 may be disposed between the conductive substrate 2 and the charge generating layer 3a. The intermediate layer 4 may be disposed for example between the charge generating layer 3a and the charge transport layer 3b. The charge generating layer 3a may be a single layer or a multi-layer.

The following describes a structure of a single-layer photosensitive member 1 which is another example of the photosensitive member according to the embodiment with reference to FIGS. 2A to 2C. FIGS. 2A to 2C each are a schematic cross-sectional view of an example of another structure of the photosensitive member according to the embodiment. As illustrated in FIG 2A, the single-layer photosensitive member 1 includes a conductive substrate 2 and a photosensitive layer 3. The photosensitive layer 3 is a single-layer photosensitive layer 3c. As illustrated in FIG 2A, the photosensitive layer 3 may be disposed directly on the conductive substrate 2. Alternatively, as illustrated in FIG 2B, the single-layer photosensitive member 1 includes for example the conductive substrate 2, an intermediate layer 4 (undercoat layer), and the photosensitive layer 3. As illustrated in FIG 2B, the photosensitive layer 3 may be disposed indirectly on the conductive substrate 2. As illustrated in FIG 2B, the intermediate layer 4 may be disposed between the conductive substrate 2 and the single-layer photosensitive layer 3c. As illustrated in FIG. 2C, the single-layer photosensitive member 1 may include a protective layer 5 as an outermost surface layer.

The photosensitive member 1 according to the embodiment is excellent in abrasion resistance. Presumably, the reason therefor is as follows. The photosensitive member 1 according to the embodiment contains the polyarylate resin (1) as a binder resin. The polyarylate resin (1) is represented by general formula (1). In the polyarylate resin (1), each repeating unit derived from an aromatic diol has a cyclododecylidene group and either one of the repeating units derived from an aromatic dicarboxylic acid has a divalent substituent represented by any of chemical formulas (4A) to (4C). In the polyarylate resin (1) having a structure as described above, entanglement of molecule chains of the polyarylate resin (1) tends not to be reduced and thus packing property of molecules in the polyarylate resin (1) tends not to be reduced. The polyarylate resin (1) having such a structure has high solubility in a solvent, and therefore, preparation of an application liquid for forming the photosensitive layer 3 is facilitated. In consequence, the photosensitive layer 3 tends to have high layer density. Thus, the photosensitive member 1 according to the embodiment is excellent in abrasion resistance.

The following describes elements (the conductive substrate 2, the photosensitive layer 3, and the intermediate layer 4) of the photosensitive member 1 according to the embodiment. A photosensitive member production method will be described in addition.

### [1. Conductive Substrate]

No specific limitations are placed on the conductive substrate 2 other than being a conductive substrate that can be used in the photosensitive member 1. The conductive substrate 2 can be formed by a material having conductivity (also referred to below as a conductive material) at at least a surface portion thereof. An example of the conductive substrate 2 is a conductive substrate made from a conductive material. Another example of the conductive substrate 2 is a conductive substrate covered with a conductive material. Examples of conductive materials that can be used include aluminum, iron, copper, tin, platinum, silver, vanadium, molybdenum, chromium, cadmium, titanium, nickel, palladium, and indium. Any one of the conductive materials listed above may be used independently, or any two or more of the conductive materials listed above may be used in combination. Examples of combinations of any two or more conductive materials include alloys (specific examples include aluminum alloys, stainless steel, and brass).

Of the conductive materials listed above, aluminum and an aluminum alloy are preferable in terms of favorable charge mobility from the photosensitive layer 3 to the conductive substrate 2.

The shape of the conductive substrate 2 may be selected as appropriate to match the configuration of an image forming apparatus in which the conductive substrate 2 is to be used. Examples of shapes of the conductive substrate 2 include a sheet-like shape and a drum-like shape. The thickness of the conductive substrate 2 can be selected as appropriate in accordance with the shape of the conductive substrate 2.

### [2. Photosensitive Layer]

The photosensitive layer 3 contains a charge generating material, a hole transport material, and the polyarylate resin (1) as a binder resin. The photosensitive layer may further contain an additive. The photosensitive layer 3 of the multi-layer photosensitive member 1 includes the charge generating layer 3a and the charge transport layer 3b. The charge generating layer 3a contains a charge generating material. The charge generating layer 3a may contain a binder resin for charge transport layer formation (also referred to below as a base resin). The charge transport layer 3b contains a hole transport material and a binder resin. No specific limitations are placed on the thickness of the charge generating layer 3a so long as the thickness thereof is sufficient to enable the charge generating layer to work. Specifically, the charge generating layer 3a preferably has a thickness of at least 0.01 µm and no greater than 5 µm, and more preferably at least 0.1 µm and no greater than 3 µm. No specific limitations are placed on the thickness of the charge transport layer 3b so long as the thickness thereof is sufficient to enable the charge transport layer 3b to work. Specifically, the charge transport layer 3b preferably has a thickness of at least 2 µm and no greater than 100 µm, and more preferably at least 5 µm and no greater than 50 µm.

The photosensitive layer 3 of the single-layer photosensitive member 1 contains a charge generating material, a hole transport material, and the polyarylate resin (1) as a binder resin. No particular limitations are placed on the thickness of the photosensitive layer 3 so long as the thickness thereof is sufficient to enable the photosensitive layer 3 to function as a photosensitive layer. Specifically, the photosensitive layer 3 preferably has a thickness of at least 5 µm and no greater than 100 µm, and more preferably at least 10 µm and no greater than 50 µm.

### [2-1. Common Elements]

The following describes the charge generating material, the hole transport material, and the binder resin. An additive will be descried in addition.

### [2-1-1. Charge Generating Material]

No particular limitations are placed on the charge generating material other than being a charge generating material that can be used in photosensitive members. Examples of charge generating materials include phthalocyanine-based pigments, perylene-based pigments, bisazo pigments, dithioketopyrrolopyrrole pigments, metal-free naphthalocyanine pigments, metal naphthalocyanine pigments, squaraine pigments, tris-azo pigments, indigo pigments, azulenium pigments, cyanine pigments, powders of inorganic photoconductive materials such as selenium, selenium-tellurium, selenium-arsenic, cadmium sulfide, and amorphous silicon, pyrylium salts, anthanthrone-based pigments, triphenylmethane-based pigments, threne-based pigments, toluidine-based pigments, pyrazoline-based pigments, and quinacridone-based pigments. Examples of phthalocyanine-based pigments include phthalocyanine pigments and pigments of phthalocyanine derivatives. Examples of phthalocyanine pigments include metal-free phthalocyanine pigments (specific examples include an X-form metal-free phthalocyanine pigment (x-H₂Pc)). Examples of pigments of phthalocyanine derivatives include metal phthalocyanine pigments (specific examples include titanyl phthalocyanine pigments and V-form hydroxygallium phthalocyanine pigments). No specific limitations are placed on the crystal structure of the phthalocyanine-based pigments, and phthalocyanine-based pigments having various crystal structures can be used. The phthalocyanine-based pigments for example have an α-form crystal structure, a β-form structure, or a Y-form crystal structure. Any one charge generating material may be used independently, or any two or more charge generating materials may be used in combination. In a situation in which the photosensitive layer contains the polyarylate resin (1) as a binder resin, the charge generating material is preferably a phthalocyanine-based pigment in terms of improving abrasion resistance of the photosensitive member, more preferably a titanyl phthalocyanine pigment, and further preferably a Y-form titanyl phthalocyanine pigment (Y-TiOPc).

Any single charge generating material or a combination of any two or more charge generating materials that each are absorptive with respect to light in a desired wavelength region may be used. Furthermore, the photosensitive member 1 preferably has a sensitivity in a wavelength range of at least 700 nm for example for use in a digital optical image forming apparatus. Examples of digital optical image forming apparatuses include laser beam printers and facsimile machines that use a light source such as a semiconductor laser. In view of the foregoing, for example, a phthalocyanine-based pigment is preferable and a Y-form titanyl phthalocyanine pigment is more preferable.

A Y-form titanyl phthalocyanine pigment exhibits a main peak at a Bragg angle 2θ ± 0.2° of 27.2° in a CuKα characteristic X-ray diffraction spectrum. The term main peak refers to a peak in the CuKα characteristic X-ray diffraction spectrum having a highest or second highest intensity in a range of Bragg angles (2θ ± 0.2°) from 3° to 40°.

### (CuKα Characteristic X-ray Diffraction Spectrum Measuring Method)

The following describes a CuKα characteristic X-ray diffraction spectrum measuring method. A sample (titanyl phthalocyanine pigment) is loaded into a sample holder of an X-ray diffraction spectrometer ("RINT (registered Japanese trademark) 1100", product of Rigaku Corporation), and an X-ray diffraction spectrum is measured using a Cu X-ray tube under conditions of a tube voltage of 40 kV, a tube current of 30 mA, and X-rays of characteristic CuKα having a wavelength of 1.542 Å. Measurement is performed in a range (2θ) from 3° to 40° (starting angle 3°, stop angle 40°), and a scanning speed is for example 10°/minute. A main peak in the plotted X-ray diffraction spectrum is determined and a Bragg angle of the main peak is read from the X-ray diffraction spectrum.

A photosensitive member included in an image forming apparatus that uses a short-wavelength laser light source preferably contains an anthanthrone-based pigment or a perylene-based pigment as a charge generating material. The short-wavelength laser light source has a wavelength of for example approximately 350 nm to 550 nm.

The charge generating material is for example a phthalocyanine-based pigment represented by any of chemical formulas (CGM-1) to (CGM-4) (also referred to below as charge generating materials (CGM-1) to (CGM-4), respectively).

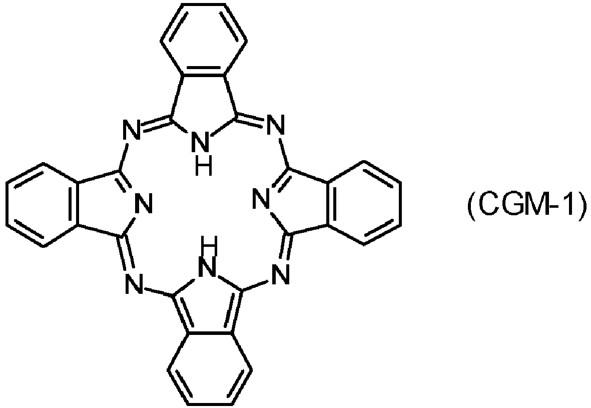

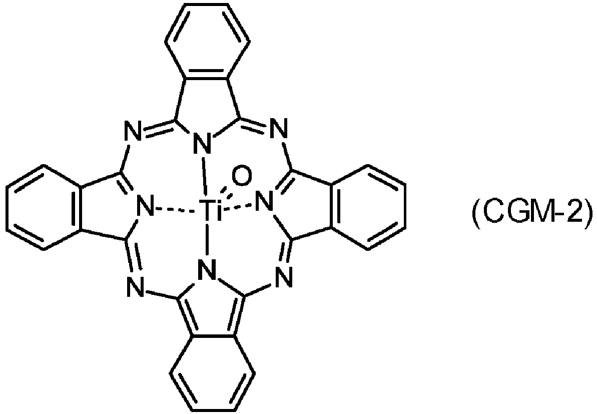

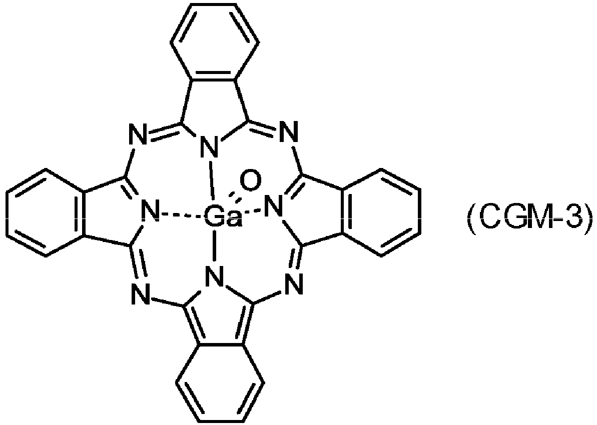

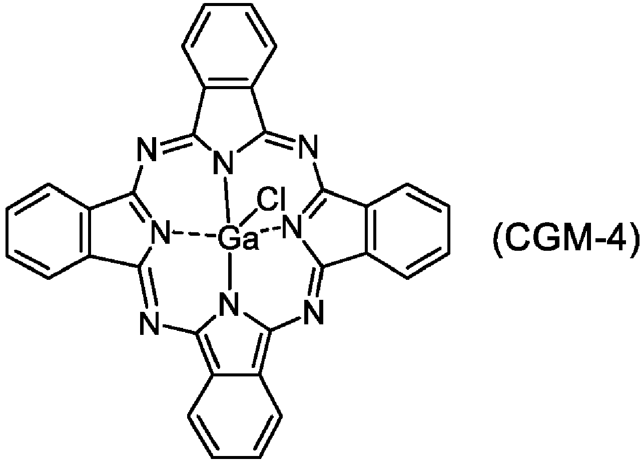

The amount of the charge generating material is preferably at least 5 parts by mass and no greater than 1,000 parts by mass relative to 100 parts by mass of a binder resin for charge generating layer formation (also referred to below as a base resin), and more preferably at least 30 parts by mass and no greater than 500 parts by mass.

### [2-1-2. Hole Transport Material]

Examples of the hole transport material include nitrogen-containing cyclic compounds and condensed polycyclic compounds. Examples of nitrogen-containing cyclic compounds and condensed polycyclic compounds include: diamine derivatives (specific examples include N,N,N',N'-tetraphenylphenylenediamine derivative, N,N,N',N'-tetraphenylnaphtylenediamine derivative, and N,N,N',N'-tetraphenylphenanthrylenediamine derivative); oxadiazole-based compounds (specific examples include 2,5-di(4-methylaminophenyl)-1,3,4-oxadiazole), styryl-based compounds (specific examples include 9-(4-diethylaminostyryl)anthracene); carbazole-based compounds (specific examples include polyvinyl carbazole); organic polysilane compounds; pyrazoline-based compounds (specific examples include 1-phenyl-3-(p-dimethylaminophenyl)pyrazoline); hydrazone-based compounds; indole-based compounds; oxazole-based compounds; isoxazole-based compounds; thiazole-based compounds; thiadiazole-based compounds; imidazole-based compounds; pyrazole-based compounds; and triazole-based compounds.

In terms of further improving abrasion resistance of the photosensitive member 1, a compound represented by general formula (2), general formula (3), or general formula (4) (also referred to below as a hole transport material (2), a hole transport material (3), and a hole transport material (4), respectively) is preferable out of the above hole transport materials and the hole transport material (4) is more preferable. In terms of improving sensitivity characteristics of the photosensitive member 1, the hole transport material (2), the hole transport material (3), and the hole transport material (4) are preferable out of the above hole transport materials. The hole transport materials (2) and (3) are more preferable, and the hole transport material (3) is further preferable. In terms of further improving abrasion resistance of the photosensitive member 1, the hole transport material (2), the hole transport material (3), and the hole transport material (4) are preferable out of the above hole transport materials and the hole transport material (4) is more preferable.

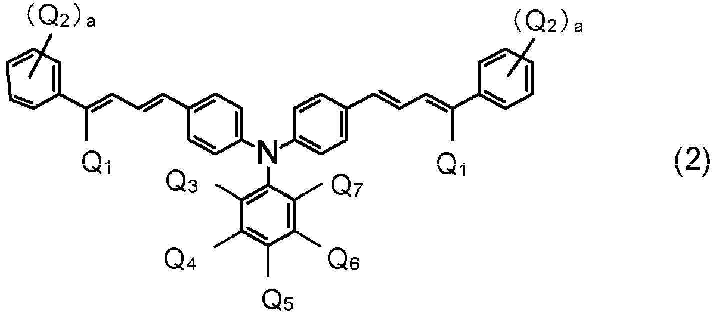

In general formula (2), Q₁ represents a hydrogen atom, an alkyl group having a carbon number of at least 1 and no greater than 8, an alkoxy group having a carbon number of at least 1 and no greater than 8, or a phenyl group. The phenyl group that may be represented by Q₁ may optionally have an alkyl group having a carbon number of at least 1 and no greater than 8. Q₂ represents an alkyl group having a carbon number of at least 1 and no greater than 8, an alkoxy group having a carbon number of at least 1 and no greater than 8, or a phenyl group. Q₃, Q₄, Q₅, Q₆, and Q₇ each represent, independently of one another, a hydrogen atom, an alkyl group having a carbon number of at least 1 and no greater than 8, an alkoxy group having a carbon number of at least 1 and no greater than 8, or a phenyl group. Two adjacent chemical groups among Q₃, Q₄, Q₅, Q₆, and Q₇ may be bonded together to form a ring. The two chemical groups Q₁ may be the same as or different from each other. a represents an integer of at least 0 and no greater than 5. When a represents an integer of at least 2 and no greater than 5, plural chemical groups Q₂ bonded to a single phenyl group may be the same as or different from each other.

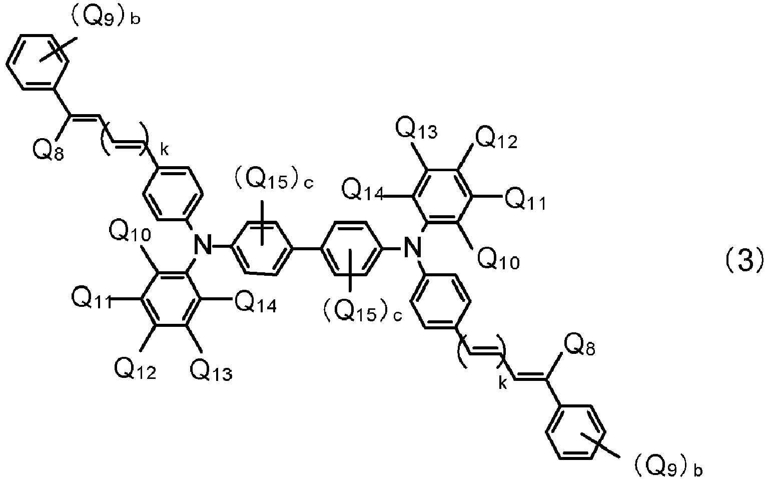

In general formula (3), Q₈, Q₁₀, Q₁₁, Q₁₂, Q₁₃, and Q₁₄ each represent, independently of one another, a hydrogen atom, an alkyl group having a carbon number of at least 1 and no greater than 8, an alkoxy group having a carbon number of at least 1 and no greater than 8, or a phenyl group. Q₉ and Q₁₅ each represent, independently of one another, an alkyl group having a carbon number of at least 1 and no greater than 8, an alkoxy group having a carbon number of at least 1 and no greater than 8, or a phenyl group. b represents an integer of at least 0 and no greater than 5. When b represents an integer of at least 2 and no greater than 5, plural chemical groups Q₉ bonded to a single phenyl group may be the same as or different from each other. c represents an integer of at least 0 and no greater than 4. When c represents an integer of at least 2 and no greater than 4, plural chemical groups Q₁₅ bonded to a single phenylene group may be the same as or different from each other. k represents 0 or 1.

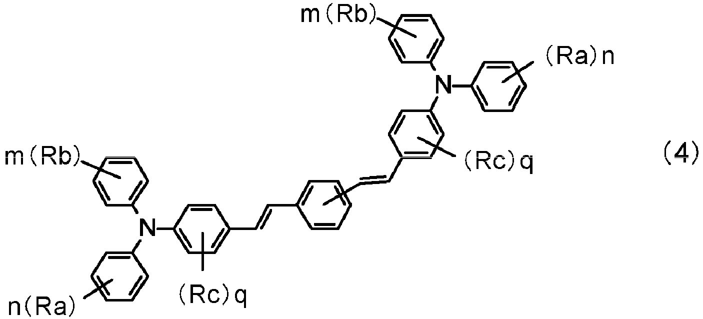

In general formula (4), Rₐ, R_{b}, and R_{c} each represent, independently of one another, an alkyl group having a carbon number of at least 1 and no greater than 8, a phenyl group, or an alkoxy group having a carbon number of at least 1 and no greater than 8. q represents an integer of at least 0 and no greater than 4. When q represents an integer of at least 2 and no greater than 4, plural chemical groups R_{c} bonded to a single phenylene group may be the same as or different from each other. m and n each represent, independently of one another, an integer of at least 0 and no greater than 5. When m represents an integer of at least 2 and no greater than 5, plural chemical groups R_{b} bonded to a single phenyl group may be the same as or different from each other. When n represents an integer of at least 2 and no greater than 5, plural chemical groups Rₐ bonded to a single phenyl group may be the same as or different from each other.

In general formula (2), a phenyl group that may be represented by Q₁ is preferably a phenyl group having an alkyl group having a carbon number of at least 1 and no greater than 8 and more preferably a phenyl group having a methyl group.

In general formula (2), an alkyl group having a carbon number of at least 1 and no greater than 8 that may be represented by Q₂ is preferably an alkyl group having a carbon number of at least 1 and no greater than 6, more preferably an alkyl group having a carbon number of at least 1 and no greater than 4, and further preferably a methyl group. Preferably, a represents 0 or 1.

In general formula (2), an alkyl group having a carbon number of at least 1 and no greater than 8 that may be represented by any of Q₃ to Q₇ is preferably an alkyl group having a carbon number of at least 1 and no greater than 4 and more preferably an n-butyl group. In general formula (2), an alkoxy group having a carbon number of at least 1 and no greater than 8 that may be represented by any of Q₃ to Q₇ is preferably an alkoxy group having a carbon number of at least 1 and on greater than 4 and more preferably a methoxy group or an ethoxy group. In general formula (2), Q₃ to Q₇ each preferably represent, independently of one another, a hydrogen atom, an alkyl group having a carbon number of at least 1 and no greater than 8, or an alkoxy group having a carbon number of at least 1 and no greater than 8, and more preferably represent a hydrogen atom, an alkyl group having a carbon number of at least 1 and no greater than 4, or an alkoxy group having a carbon number of at least 1 and no greater than 4.

In general formula (2), adjacent two chemical groups among Q₃ to Q₇ may be bonded together to form a ring (specifically, a benzene ring or a cycloalkane having a carbon number of at least 5 and no greater than 7). For example, adjacent chemical groups Q₆ and Q₇ among Q₃ to Q₇ may be bonded together to form a benzene ring or a cycloalkane having a carbon number of at least 5 and no greater than 7. In a composition in which adjacent two chemical groups among Q₃ to Q₇ are bonded together to form a benzene ring, the benzene ring fuses with a phenyl group, to which corresponding one of the chemical groups Q₃ to Q₇ are bonded, to form a fused bi-cyclic group (naphthyl group). In a composition in which adjacent two chemical groups among Q₃ to Q₇ are bonded together to form a cycloalkane having a carbon number of at least 5 and no greater than 7, the cycloalkane having a carbon number of at least 5 and no greater than 7 fuses with a phenyl group, to which corresponding one of the chemical groups Q₃ to Q₇ are bonded, to form a fused bi-cyclic group. In the above composition, a condensation site of the phenyl group and the cycloalkane having a carbon number of at least 5 and no greater than 7 may have a double bond. Two adjacent chemical groups among Q₃ to Q₇ are bonded together preferably to form a cycloalkane having a carbon number of at least 5 and no greater than 7, and more preferably to form cyclohexane.

It is preferable in general formula (2) that: Q₁ represents a hydrogen atom or a phenyl group having an alkyl group having a carbon number of at least 1 and no greater than 8; Q₂ represents an alkyl group having a carbon number of at least 1 and no greater than 8; Q₃ to Q₇ each represent, independently of one another, a hydrogen atom, an alkyl group having a carbon number of at least 1 and no greater than 8, or an alkoxy group having a carbon number of at least 1 and no greater than 8; and a represents 0 or 1. Two adjacent chemical groups among Q₃ to Q₇ may be bonded together to form a ring.

In general formula (3), an alkyl group having a carbon number of at least 1 and no greater than 8 that may be represented by any of Q₈ and Q₁₀ to Q₁₄ is preferably an alkyl group having a carbon number of at least 1 and no greater than 4 and more preferably a methyl group or an ethyl group. It is preferable in general formula (3) that Q₈ and Q₁₀ to Q₁₄ each represent, independently of one another, a hydrogen atom, an alkyl group having a carbon number of at least 1 and no greater than 4, or a phenyl group, and b and c each represent 0.

In general formula (4), an alkyl group having a carbon number of at least 1 and no greater than 8 that may be represented by either or both Rₐ and R_{b} is preferably an alkyl group having a carbon number of at least 1 and no greater than 4 and more preferably a methyl group or an ethyl group. It is preferable in general formula (4) that: Rₐ and R_{b} each represent an alkyl group having a carbon number of at least 1 and no greater than 8; m and n each represent, independently of one another, an integer of at least 0 and no greater than 2; and q represent 0.

Specific examples of the hole transport material (2) include hole transport materials represented by chemical formulas (HTM-1) to (HTM-4) (also referred to below as hole transport materials (HTM-1) to (HTM-4), respectively). Examples of the hole transport material (3) include hole transport materials represented by chemical formulas (HTM-5) to (HTM-7) (also referred to below as hole transport materials (HTM-5) to (HTM-7), respectively). Examples of the hole transport material (4) include hole transport materials represented by chemical formulas (HTM-8) and (HTM-9) (also referred to below as hole transport materials (HTM-8) and (HTM-9), respectively).

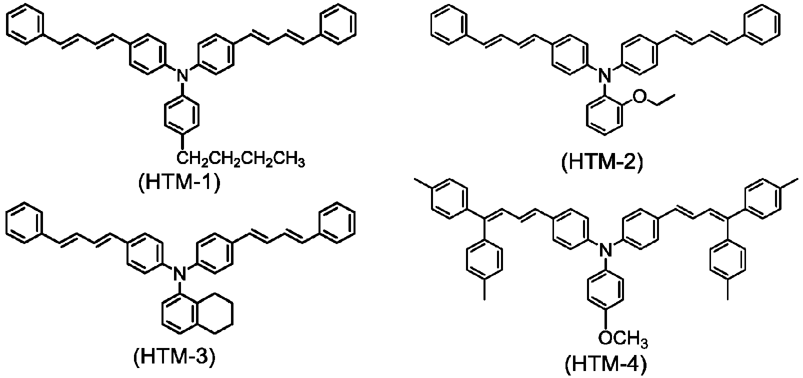

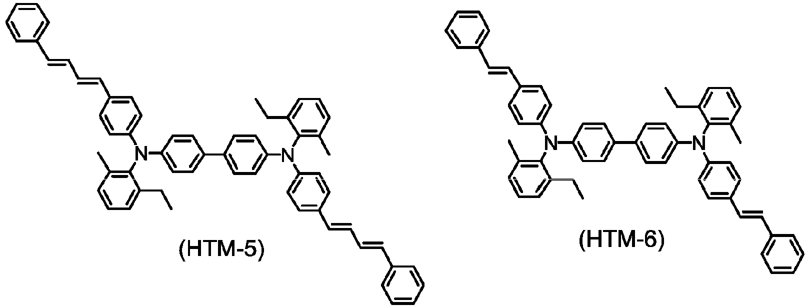

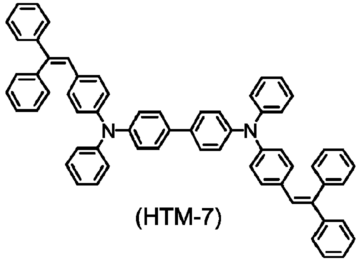

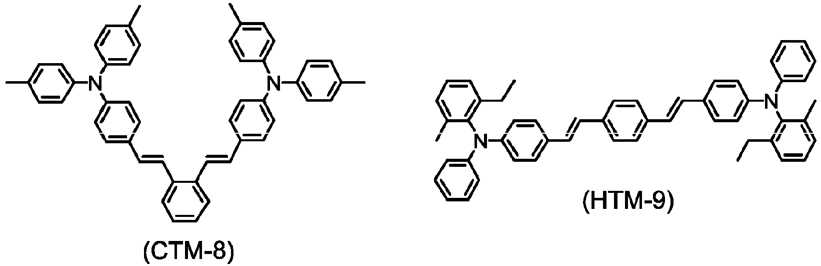

The amount of the hole transport material in a multi-layer photosensitive member is preferably at least 10 parts by mass and no greater than 200 parts by mass relative to 100 parts by mass of the binder resin, and more preferably at least 20 parts by mass and no greater than 100 parts by mass.

### [2-1-3. Binder Resin]

The binder resin includes the polyarylate resin (1). The binder resin is used in the charge transport layer 3b or the single-layer photosensitive layer 3c. As a result of the photosensitive member 1 containing the polyarylate resin (1), abrasion resistance of the photosensitive member 1 can be improved.

As the binder resin, the polyarylate resin (1) may be used independently or an additional resin that is not the polyarylate resin (1) may be included in addition. Examples of the additional resin include thermoplastic resins, thermosetting resins, and photocurable resins. Examples of thermoplastic resins include polyarylate resins that are not the polyarylate resin (1), polycarbonate resins, styrene-based resins, styrene-butadiene copolymers, styrene-acrylonitrile copolymers, styrene-maleate copolymers, styrene-acrylate copolymers, acrylic copolymers, polyethylene resins, ethylene-vinyl acetate copolymers, chlorinated polyethylene resins, polyvinyl chloride resins, polypropylene resins, ionomers, vinyl chloride-vinyl acetate copolymers, polyester resins, alkyd resins, polyamide resins, polyurethane resins, polysulfone resins, diallyl phthalate resins, ketone resins, polyvinyl butyral resins, polyether resins, and polyester resins. Examples of thermosetting resins that can be used include silicone resins, epoxy resins, phenolic resins, urea resins, melamine resins, and other crosslinkable thermosetting resins. Examples of photocurable resins that can be used include epoxy-acrylic acid-based resins and urethane-acrylic acid-based copolymers. Any one of the resins listed above may be used independently, or any two or more resins listed above may be used in combination. The amount of the polyarylate resin (1) is preferably at least 80 parts by mass relative to 100 parts by mass of the binder resin, more preferably at least 90 parts by mass, and further preferably 100 parts by mass.

A ratio of a mass of the binder resin is preferably at least 40% by mass relative to a total mass of all elements included in the photosensitive layer 3 (for example, the hole transport material and the binder resin), and more preferably at least 80% by mass.

### [2-1-4. Additives]

Various additives may be contained in at least one of the charge generating layer 3a, the charge transport layer 3b, the single-layer photosensitive layer 3c, and the intermediate layer 4 so long as electrophotographic characteristics are not adversely affected. Examples of additives include antidegradants (specific examples include antioxidants, radical scavengers, quenchers, and ultraviolet absorbing agents), softeners, surface modifiers, extenders, thickeners, dispersion stabilizers, waxes, electron acceptor compounds, donors, surfactants, and leveling agents.

Examples of antioxidants include hindered phenol compounds, hindered amine compounds, thioether compounds, and phosphite compounds. Of the above antioxidants, a hindered phenol compound and a hindered amine compound are preferable.

The mass of the antioxidant added in the charge transport layer 3b is preferably at least 0.1 parts by mass and no greater than 10 parts by mass relative to 100 parts by mass of the binder resin. When the mass of the antioxidant is in a range as described above, it is easy to prevent impairment of electrical characteristics caused due to oxidation of a photosensitive member.

An example of the electron acceptor compounds is 3,3',5,5'-tetra-tert-butyl-4,4'-diphenoquinone.

### [2-2. Non-common Elements]

### (2-1-1. Base Resin)

No specific limitations are placed on the base resin other than being usable in the photosensitive member 1. Examples of the base resin include thermoplastic resins, thermosetting resins, and photocurable resins. Examples of thermoplastic resins include styrene-based resins, styrene-butadiene copolymers, styrene-acrylonitrile copolymers, styrene-maleic acid copolymers, styrene-acrylic acid copolymers, acrylic copolymers, polyethylene resins, ethylene-vinyl acetate copolymers, chlorinated polyethylene resins, polyvinyl chloride resins, polypropylene resins, ionomers, vinyl chloride-vinyl acetate copolymers, alkyd resins, polyamide resins, urethane resins, polycarbonate resins, polyarylate resins, polysulfone resins, diallyl phthalate resins, ketone resins, polyvinyl butyral resins, polyether resins, and polyester resins. Examples of thermosetting resins that can be used include silicone resins, epoxy resins, phenolic resins, urea resins, melamine resins, and other crosslinkable thermosetting resins. Examples of photocurable resins that can be used include epoxy-acrylic acid-based resins and urethane-acrylic acid-based resins. Any one of the resins listed above may be used independently, or any two or more of the resins listed above may be used in combination. Of the base resins listed above, a polyvinyl acetal resin is preferable.

Although the same resins as those listed above as the binder resin are listed as examples of the base resin, a resin different from the binder resin is usually selected as the base resin in an identical multi-layer photosensitive member 1. The reason therefor is as follows. In production of the multi-layer photosensitive member 1, the charge generating layer 3a and the charge transport layer 3b are formed in stated order usually. This accordingly means that an application liquid for charge transport layer formation is applied onto the charge generating layer 3a. The charge generating layer 3a is preferably not dissolved in a solvent of the application liquid for charge transport layer formation in formation of the charge transport layer 3b. In view of the foregoing, a resin different from the binder resin is usually selected as the base resin in the identical multi-layer photosensitive member 1.

### [3. Intermediate Layer]

The photosensitive member 1 according to the embodiment may optionally include the intermediate layer 4 (for example, an undercoat layer). The intermediate layer 4 for example contains inorganic particles and a resin (intermediate layer resin). Provision of the intermediate layer 4 can facilitate smooth flow of electric current generated when the photosensitive member 1 is exposed to light and inhibit increasing electric resistance, while also maintaining insulation to a sufficient degree so as to inhibit occurrence of leakage current.

Examples of inorganic particles include particles of metals (specific examples include aluminum, iron, and copper), particles of metal oxides (specific examples include titanium oxide, alumina, zirconium oxide, tin oxide, and zinc oxide), and particles of non-metal oxides (specific examples include silica). Any one of the types of inorganic particles listed above may be used independently, or any two or more of the types of organic particles listed above may be used in combination. Note that the inorganic particles may be subjected to surface treatment.

No specific limitations are placed on the intermediate layer resin other than being a resin that can be used to form the intermediate layer 4.

### [4. Photosensitive Member Production Method]

The following describes a production method of the photosensitive member 1. The production method of the photosensitive member 1 includes for example a photosensitive layer formation step.

### [4-1. Multi-Layer Photosensitive Member Production Method]

A production method of the multi-layer photosensitive member 1 includes for example a photosensitive layer formation step. The photosensitive layer formation step includes a charge generating layer formation step and a charge transport layer formation step. In the charge generating layer formation step, an application liquid for forming the charge generating layer 3a (also referred to below as an application liquid for charge generating layer formation) is prepared first. The application liquid for charge generating layer formation is applied onto the conductive substrate 2 to form a coating film. Next, the coating film is dried by an appropriate method to remove at least a portion of a solvent included in the coating film, thereby forming the charge generating layer 3a. The application liquid for charge generating layer formation contains for example a charge generating material, a base resin, and the solvent. The application liquid for charge generating layer formation as described above is prepared by dissolving or dispersing the charge generating material and the base resin in the solvent. Various additives may optionally be added to the application liquid for charge generating layer formation as necessary.

In the charge transport layer formation step, an application liquid for forming the charge transport layer 3b (also referred to below as an application liquid for charge transport layer formation) is prepared first. The application liquid for charge transport layer formation is applied onto the charge generating layer 3a to form a coating film. Next, the coating film is dried by an appropriate method to remove at least a portion of a solvent included in the coating film, thereby forming the charge transport layer 3b. The application liquid for charge transport layer formation contains a hole transport material, the polyarylate resin (1) as a binder resin, and the solvent. The application liquid for charge transport layer formation can be prepared by dissolving or dispersing the hole transport material and the polyarylate resin (1) in the solvent. Various additives may optionally be added to the application liquid for charge transport layer formation as necessary.

### [4-2. Single-layer Photosensitive Member Production Method]

A production method of the single-layer photosensitive member 1 includes for example a photosensitive layer formation step. In the photosensitive layer formation step, an application liquid for forming the photosensitive layer 3 (also referred to below as an application liquid for photosensitive layer formation) is prepared. The application liquid for photosensitive layer formation is applied onto the conductive substrate 2 to form a coating film. Next, the coating film is dried by an appropriate method to remove at least a portion of a solvent included in the applied application liquid for photosensitive layer formation, thereby forming the photosensitive layer 3. The application liquid for photosensitive layer formation contains for example a charge generating material, a hole transport material, the polyarylate resin (1) as a binder resin, and the solvent. The application liquid for photosensitive layer formation such as above is prepared by dissolving or dispersing the charge generating material, the hole transport material, and the binder resin in the solvent. Various additives may optionally be added to the application liquid for photosensitive layer formation as necessary.

The following further describes the photosensitive layer formation step. No specific limitations are placed on the respective solvents contained in the application liquid for charge generating layer formation, the application liquid for charge transport layer formation, and the application liquid for photosensitive layer formation (these three application liquids may be also referred to below collectively as application liquids) other than being capable of dissolving or dispersing components included in the respective application liquids and being readily removable from the respective coating films. Examples of the solvents include alcohols (specific examples include methanol, ethanol, isopropanol, and butanol), aliphatic hydrocarbons (specific examples include n-hexane, octane, and cyclohexane), aromatic hydrocarbons (specific examples include benzene, toluene, and xylene), halogenated hydrocarbons (specific examples include dichloromethane, dichloroethane, carbon tetrachloride, and chlorobenzene), ethers (specific examples include dimethyl ether, diethyl ether, tetrahydrofuran, ethylene glycol dimethyl ether, and diethylene glycol dimethyl ether), ketones (specific examples include acetone, methyl ethyl ketone, and cyclohexanone), esters (specific examples include ethyl acetate and methyl acetate), dimethyl formaldehyde, dimethyl formamide, and dimethyl sulfoxide. Any one of the solvents listed above may be used independently, or any two or more of the solvents listed above may be used in combination. Of the solvents listed above, a non-halogen solvent is preferably used. Examples of combinations of any two or more solvents listed above include combined solvents including methanol, butanol, and toluene, combined solvents including propylene glycol monomethyl ether and tetrahydrofuran, and combined solvents including tetrahydrofuran and toluene.

Furthermore, the solvent contained in the application liquid for charge transport layer formation is preferably different from the solvent contained in the application liquid for charge generating layer formation. In production of the multi-layer photosensitive member 1, the charge generating layer 3a and the charge transport layer 3b are formed in stated order usually. This means that the application liquid for charge transport layer formation is applied onto the charge generating layer 3a. Therefore, the charge generating layer 3a is required not to dissolve in the solvent in the application liquid for charge transport layer formation in formation of the charge transport layer 3b.

Each of the application liquids is prepared by mixing respective appropriate components in order to disperse the components in a corresponding one of the solvents. Mixing or dispersion can for example be performed using a bead mill, a roll mill, a ball mill, an attritor, a paint shaker, or an ultrasonic disperser.

The application liquids may contain for example a surfactant or a leveling agent in order to improve dispersibility of the components or improve surface flatness of the formed layers.

No specific limitations are placed on a method for applying each application liquid so long as uniform application of the application liquid can be achieved. Examples of application methods include dip coating, spray coating, spin coating, and bar coating.

No specific limitations are placed on a method by which at least a portion of the solvent in each application liquid is removed other than being a method that enables evaporation of the solvent in the application liquid. Examples of methods that can be used for removal include heating, pressure reduction, and a combination of heating and pressure reduction. One specific example of such a method involves heat treatment (specifically, hot-air drying or the like) using a high-temperature dryer or a reduced pressure dryer. The heat treatment is for example performed for 3 minutes or longer and 120 minutes or shorter at a temperature of 40°C or higher and 150°C or lower.

Note that an intermediate layer formation step may further be included in the photosensitive member production method as needed. Any known intermediate layer formation method can be selected as appropriate as the intermediate layer formation step.

The electrophotographic photosensitive member according to the embodiment of the present invention described above, which is excellent in abrasion resistance, is favorably used in various image forming apparatuses.

### [Examples]

The following provides more specific description of the present invention through use of Examples. However, note that the present invention is not limited to the scope of the Examples.

### (Preparation of Materials of Photosensitive Member)

A charge generating material, hole transport materials, and binder resins were prepared in order to form photosensitive layers.

### (Charge Generating Material)

The charge generating material (CGM-2) described in the embodiment was prepared. The charge generating material (CGM-2) was a Y-form titanyl phthalocyanine pigment (Y-form titanyl phthalocyanine crystals) represented by chemical formula (CGM-2). The charge generating material (CGM-2) had a Y-form crystal structure.

The Y-form titanyl phthalocyanine crystals exhibited peaks at Bragg angles 2θ ± 0.2° of 9.2°, 14.5°, 18.1°, 24.1°, and 27.3° in a CuKα characteristic X-ray diffraction spectral chart, and the main peak was 27.2°. Note that the CuKα characteristic X-ray diffraction spectrum was measured using the measuring device described in the embodiment under the measurement conditions described in the embodiment.

### (Hole Transport Material)

The hole transport materials (HTM-1) to (HTM-9) described in the embodiment were prepared.

### (Binder Resin)

The polyarylate resins (Resin-1) to (Resin-10) described in the embodiment were prepared each as the binder resin. Binder resins (Resin-B1), (Resin-B2), and (Resin-B4) were also prepared. The binder resins (Resin-B1), (Resin-B2), and (Resin-B4) were represented by chemical formulas (Resin-B1), (Resin-B2), and (Resin-B4), respectively.

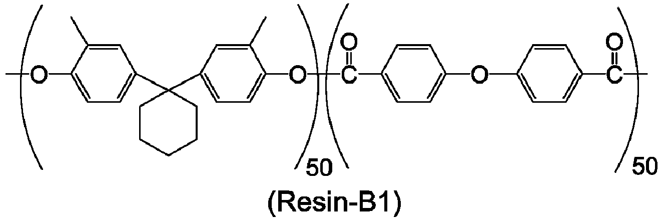

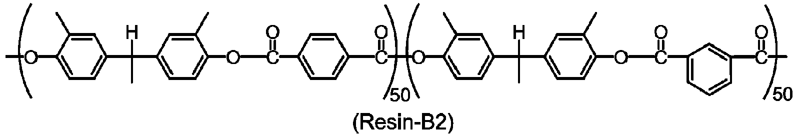

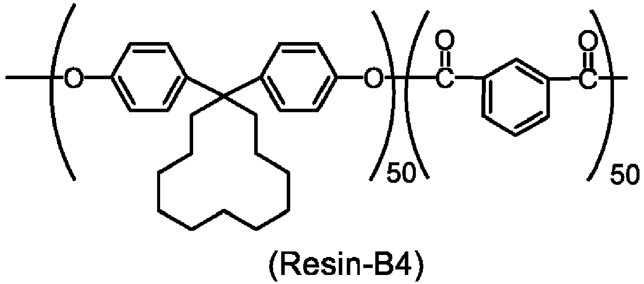

### «Polyarylate Resin Preparation»

### [Synthesis of Polyarylate Resin (Resin-1)]

A three-necked flask was used as a reaction vessel. The reaction vessel was a 1-L three-necked flask equipped with a thermometer, a three-way cock, and a 200-mL dropping funnel. The reaction vessel was charged with 29.10 g (82.56 mmol) of 1,1-bis(4-hydroxyphenyl)cyclododecane, 0.124 g (0.826 mmol) of t-butylphenol, 7.84 g (196 mmol) of sodium hydroxide, and 0.240 g (0.768 mmol) of benzyltributylammonium chloride. Subsequently, the reaction vessel was purged with argon. Thereafter, the reaction vessel was additionally charged with 600 mL of water. The reaction vessel contents were stirred for 1 hour while the internal temperature of the reaction vessel was kept at 20°C. The internal temperature of the reaction vessel was then cooled to 10°C. Through the above, an alkaline aqueous solution was yielded.

Separately from the alkaline aqueous solution, 9.84 g (38.9 mmol) of 2,6-naphthalenedicarboxylic acid dichloride and 11.47 g (38.9 mmol) of 4,4'-oxybis benzoic acid dichloride were dissolved in 300 g of chloroform. Through the above, a chloroform solution was yielded.

Next, the chloroform solution was gradually dripped into the above-described alkaline aqueous solution through a dropping funnel over 110 minutes to initiate polymerization reaction. The reaction vessel contents were stirred for 3 hours while the internal temperature of the reaction vessel was adjusted to 13 ± 3°C to cause the polymerization reaction to proceed.

Thereafter, decantation was performed to remove an upper layer (water layer) of the reaction vessel contents to collect an organic layer. Next, a 2-L three-necked flask was charged with 500 mL of ion exchanged water and then charged with the collected organic layer. The flask was further charged with 300 g of chloroform and 6 mL of acetic acid. The three-necked flask contents were stirred for 30 minutes at room temperature (25°C). Thereafter, decantation was performed to remove an upper layer (water layer) of the three-necked reaction vessel contents to collect an organic layer. The collected organic layer was washed with 500 mL of water 5 times using a separatory funnel. Through the above, a water-washed organic layer was obtained.

Subsequently, the water-washed organic layer was filtered to obtain a filtrate. A 3-L beaker was charged with 1.5 L of methanol. The resultant filtrate was gradually dripped into the beaker to give a precipitate. The precipitate was collected by filtering. The collected precipitate was vacuum-dried at 70°C for 12 hours. Through the above, the polyarylate resin (Resin-1) was obtained. The polyarylate resin (Resin-1) had a mass yield of 36.1 g and a percentage yield of 83.9% by mole.

### [Synthesis of Polyarylate Resins (Resin-2) to (Resin-10)]

The polyarylate resins (Resin-2) to (Resin-10) were produced by the same method as for the polyarylate resin (Resin-1) in all aspects other than that 1,1-bis(4-hydroxyphenyl)cyclododecane was changed to aromatic diosl that were starting materials of the respective polyarylate resins (Resin-2) to (Resin-10) and/or 2,6-naphthalenedicarboxylic acid dichloride and 4,4'-oxybisbenzoic acid dichloride were changed to a halogenated alkanoil or halogenated alkanoils that each were a starting material of the polyarylate resins (Resin-2) to (Resin-10)).

Next, a ¹H-NMR spectrum of each of the produced polyarylate resins (Resin-1) to (Resin-10) was measured using a proton nuclear magnetic resonance spectrometer (product of JASCO Corporation, 300 MHz). As a solvent, CDCl₃ was used. Tetramethylsilane (TMS) was used as an internal standard sample. Of all, the polyarylate resin (Resin-1) was described as a representative example.

FIG. 3 shows a ¹H-NMR spectrum of the polyarylate resin (Resin-1). In FIG 3, a horizontal axis indicates chemical shift (unit: ppm) and a vertical axis indicates signal intensity (unit: arbitrary unit). Values for chemical shift of the polyarylate resin (Resin-1) were shown below.

Polyarylate resin (Resin-1): ¹H-NMR (300 MHz, CDCl₃) δ = 8.84 (s, 2H), 8.28 (d, 2H), 8.22 (d, 4H), 8.11 (d, 2H), 7.10-7.31 (m, 20H), 2.12 (brs, 8H), 1.38 (brs, 28H), 1.00 (brs, 8H).

From the ¹H-NMR spectrum and the chemical shift values, it was confirmed that the polyarylate resin (Resin-1) had been obtained. In the same method as described above, it was confirmed from the respective ¹H-NMR spectra that the other polyarylate resins (Resin-2) to (Resin-10) had been obtained.

### <<Photosensitive Member Production>>

### [Production of Photosensitive Member (A-1)]

The following describes production of the photosensitive member (A-1) according to Example 1.

### (Intermediate Layer Formation)

First, titanium oxide having been subjected to a surface treatment ("SMT-A (trial product)", product of Tayca Corporation, number-average primary particle size: 10 nm) was prepared. Specifically, the surface treated titanium oxide was prepared by surface-treating titanium oxide with alumina and silica and wet-dispersing the titanium oxide subjected to surface treatment using methyl hydrogen polysiloxane. Next, the surface-treated titanium oxide (2 parts by mass) and AMILAN (registered Japanese trademark) ("CM8000", product of Toray Industries, Inc., 1 part by mass), which is a polyamide resin, were added to a combined solvent. AMILAN was a quarterpolymer polyamide resin composed of polyamide 6, polyamide 12, polyamide 66, and polyamide 610. The combined solvent was a solvent including methanol (10 parts by mass), butanol (1 part by mass), and toluene (1 part by mass). The materials (the surface-treated titanium oxide and AMILAN) were dispersed in the solvent by mixing for 5 hours using a bead mill. Through the above, an application liquid for intermediate layer formation was prepared.

The resultant application liquid for intermediate layer formation was filtered using a filter having a pore size of 5 µm. Thereafter, the application liquid for intermediate layer formation was applied onto the surface of a drum-shaped aluminum support (diameter: 30 mm, total length: 246 mm) serving as a conductive substrate by dip coating to form a coating film. Next, the coating film was dried for 30 minutes at 130°C, thereby forming an intermediate layer (film thickness 1.5 µm) on the conductive substrate (drum-shaped support).

### (Charge Generating Layer Formation)

The Y-form titanyl phthalocyanine pigment (1.5 parts by mass) and a polyvinyl acetal resin ("S-LEC BX-5", product of Sekisui Chemical Co., Ltd., 1 part by mass) as a base resin were added to a combined solvent. The combined solvent was a solvent including propylene glycol monomethyl ether (40 parts by mass) and tetrahydrofuran (40 parts by mass). The materials (the Y-form titanyl phthalocyanine pigment and the polyvinyl acetal resin) were mixed for 12 hours using a bead mill to disperse the materials in the combined solvent, thereby preparing an application liquid for charge generating layer formation. The resultant application liquid for charge generating layer formation was filtered using a filter having a pore size of 3 µm. After the filtration, the resultant filtrate was applied onto the intermediate layer formed as described above by dip coating to form a coating film. The coating film was dried for 5 minutes at 50°C. Through the above, a charge generating layer (film thickness 0.3 µm) was formed on the intermediate layer.

### (Charge Transport Layer Formation)

To a combined solvent, 50 parts by mass of the hole transport material (HTM-1), 2 parts by mass of a hindered phenol antioxidant ("IRGANOX (registered Japanese trademark) 1010", product of BASF) as an additive, 2 parts by mass of 3,3',5,5'-tetra-tert-butyl-4,4'-diphenoquinone as an electron acceptor compound, and 100 parts by mass of the polyarylate resin (Resin-1) as a binder resin were added. The combined solvent was a solvent including 550 parts by mass of tetrahydrofuran and 150 parts by mass of toluene. The materials (the hole transport material (HTM-1), the hindered phenol antioxidant, the electron acceptor compound, and the polyarylate resin (Resin-1)) were mixed for 12 hours to be dispersed in the combined solvent. Thus, an application liquid for charge transport layer formation was prepared.

A coating film was formed by applying the application liquid for charge transport layer formation onto the charge generating layer by the same method as the method using the application liquid for charge generating layer formation. Next, the coating film was dried for 40 minutes at 120°C to form a charge transport layer (film thickness 20 µm) on the charge generating layer. The photosensitive member (A-1) was obtained as a result of the process described above. The photosensitive member (A-1) was a multi-layer photosensitive member in which the intermediate layer, the charge generating layer, and the charge transport layer were layered on the conductive substrate in stated order.

### [Photosensitive Members (A-2) to (A-18) and Photosensitive Members (B-1) to (B-3)]

With respect to each of photosensitive members (A-2) to (A-18) and photosensitive members (B-1) to (B-3), the photosensitive member was produced by the same method as for the photosensitive member (A-1) in all aspects other than that a hole transport material of a type as shown in Table 1 was used instead of the hole transport material (HTM-1) and a binder resin of a type as show in Table 1 was used as a binder resin instead of the polyarylate resin (Resin-1) . Note that the polyarylate resin (Resin-B2) was insufficiently dissolved and an appropriate photosensitive layer could not be formed in the photosensitive layer (B-1).

### [Evaluation of Photosensitive Member Properties]

### (Evaluation of Charge Characteristic for Photosensitive Members: Measurement of Charge Potential V₀)

With respect to each of the photosensitive members (A-1) to (A-18) and the photosensitive members (B-1) to (B-3), the surface potential of the photosensitive member at an electric current flowing into a drum of -10 µmA was measured using a drum sensitivity test device (product of Gen-Tech, Inc.) at a rotational speed of 31 rpm. The measured surface potential was taken to be a charge potential V₀ (unit: V). In the measurement environment, the temperature was 23°C and the humidity was 50% RH. Table 1 shows the charge potential V₀.

### (Evaluation of Sensitivity Characteristic for Photosensitive Members: Measurement of Post-exposure Potential V_{L})

With respect to each of the photosensitive members (A-1) to (A-18) and the photosensitive members (B-1) to (B-3), the photosensitive member was charged using a drum sensitivity test device (product of Gen-Tech, Inc.) at a rotational speed of 31 rpm so that the surface potential thereof reached -600 V Next, monochromatic light (wavelength: 780 nm, exposure amount: 0.8 µJ/cm²) was taken out from light of a halogen lamp using a bandpass filter and irradiation therewith was performed on the surface of the photosensitive member. The surface potential of the photosensitive member was measured when 80 milliseconds elapsed from completion of the irradiation with the monochromatic light. The measured surface potential was taken to be a post-exposure potential V_{L} (unit: V). In the measurement environment, the temperature was 23°C and the humidity was 50% RH. Table 1 shows the post-exposure potential V_{L}.

### (Evaluation of Abrasion Resistance for Photosensitive Members: Measurement of Abrasion Loss)

With respect to each of the photosensitive members (A-1) to (A-18) and the photosensitive members (B-1) to (B-3), the application liquid for charge transport layer formation prepared for production of the photosensitive member was applied onto a polypropylene sheet (thickness 0.3 mm) wound around an aluminum pipe (diameter: 78 mm). The application liquid was dried for 40 minutes at 120°C, thereby forming an abrasion evaluation test sheet having a charge transport layer with a film thickness of 30 µm formed thereon. A mass of the abrasion evaluation test sheet before abrasion was measured.

The charge transport layer was peeled away from the polypropylene sheet and was attached to a wheel (S-36 manufactured by TABER Industries). In a manner described above, a sample of the test film sheet was prepared. An abrasion evaluation test was performed in a manner that the produced sample was set in a rotary abrasion tester (product of Toyo Seiki Seisaku-sho, Ltd.), and rotated 1,000 rounds under conditions of a load of 500 gf and a rotational speed of 60 rpm using a wear ring CS-10 (product of TABER Industries). A mass of the abrasion evaluation test sheet after abrasion was measured. A value for mass variation was calculated from the masses of the abrasion evaluation test sheet before and after abrasion. The calculated value for mass variation was taken to be an abrasion loss (unit: mg/1,000 rounds). Abrasion resistance of the photosensitive member was evaluated based on the calculated abrasion loss.

Table 1 shows compositions and performance evaluation results for the photosensitive members (A-1) to (A-18) and the photosensitive member (B-1) to (B-3). In Table 1, HTM-1 to HTM-9 in the column titled "Hole transport material" represent hole transport materials (HTM-1) to (HTM-9), respectively. Molecular weight in the column titled "Binder resin" represents viscosity average molecular weight. Resin-1 to Resin-10, Resin B1, Resin-2, and Resin-4 under "Type" in the column titled "Binder resin" represent the polyarylate resins (Resin-1) to (Resin-10) and the binder resins (Resin-B 1), (Resin-B2), and (Resin-B4), respectively. Note that the words "not dissolved" for the photosensitive member (B-1) indicate that electrical characteristics and abrasion resistance were not evaluated. This is because an appropriate charge transport layer could not be formed.

**[Table 1]**

| | Photosensitive member | Charge transport layer | | | Electric characteristic | | Abrasion resistance |
|---|---|---|---|---|---|---|---|
| | | Hole transport material | Binder resin | | V_{O} (V) | V_{L} (V) | Abrasion loss (mg/1,000 rounds) |
| | | | Type | Molecular weight | | | |
| Example 1 | A-1 | HTM-1 | Resin-1 | 55,000 | -676 | -55 | 4.3 |
| Example 2 | A-2 | HTM-2 | Resin-1 | 55,000 | -689 | -52 | 4.1 |
| Example 3 | A-3 | HTM-3 | Resin-1 | 55,000 | -684 | -50 | 4.5 |
| Example 4 | A-4 | HTM-4 | Resin-1 | 55,000 | -695 | -58 | 4.5 |
| Example 5 | A-5 | HTM-5 | Resin-1 | 55,000 | -671 | -33 | 4.6 |
| Example 6 | A-6 | HTM-6 | Resin-1 | 55,000 | -681 | -47 | 4.1 |
| Example 7 | A-7 | HTM-7 | Resin-1 | 55,000 | -673 | -52 | 4.2 |
| Example 8 | A-8 | HTM-8 | Resin-1 | 55,000 | -673 | -89 | 4.0 |
| Example 9 | A-9 | HTM-9 | Resin-1 | 55,000 | -681 | -65 | 3.9 |
| Example 10 | A-10 | HTM-1 | Resin-2 | 52,400 | -685 | -51 | 4.3 |
| Example 11 | A-11 | HTM-1 | Resin-3 | 49,400 | -675 | -55 | 4.2 |
| Example 12 | A-12 | HTM-1 | Resin-4 | 53,500 | -684 | -53 | 4.9 |
| Example 13 | A-13 | HTM-1 | Resin-5 | 46,900 | -665 | -56 | 4.3 |
| Example 14 | A-14 | HTM-1 | Resin-6 | 52,600 | -693 | -53 | 5.8 |
| Example 15 | A-15 | HTM-1 | Resin-7 | 54,000 | -680 | -53 | 5.5 |
| Example 16 | A-16 | HTM-1 | Resin-8 | 50,000 | -679 | -54 | 4.7 |
| Example 17 | A-17 | HTM-1 | Resin-9 | 51,300 | -669 | -52 | 4.1 |
| Example 18 | A-18 | HTM-1 | Resin-10 | 52,100 | -683 | -55 | 5.3 |
| Comparative Example 1 | B-1 | HTM-1 | Resin-B1 | 57,500 | Not dissolved | | |
| Comparative Example 2 | B-2 | HTM-1 | Resin-B2 | 50,400 | -686 | -56 | 9.5 |
| Comparative Example 3 | B-3 | HTM-1 | Resin-B4 | 50,100 | -685 | -59 | 6.9 |

As shown in Table 1, the charge transport layers of the photosensitive members (A-1) to (A-18) contained any of the polyarylate resins (Resin-1) to (Resin-10) as a binder resin. The polyarylate resins (Resin-1) to (Resin-10) were each a binder resin encompassed by the polyarylate resin represented by general formula (1). As shown in Table 1, the photosensitive members (A-1) to (A-18) had an abrasion loss of at least 3.9 mg and no greater than 5.8 mg.

As shown in Table 1, the charge transport layers of the photosensitive members (B-1) to (B-3) contained the polyarylate resins (Resin-B1), (Resin-B2), and (Resin-B4), respectively, as a binder resin. The polyarylate resins (Resin-B1), (Resin-B2), and (Resin-B4) each were not a binder resin encompassed by the polyarylate resin represented by general formula (1). As shown in Table 1, a sufficiently thick photosensitive layer could not be formed in the photosensitive member (B-1) since the polyarylate resin (Resin-B1) was hardly dissolved in a solvent of the application liquid for photosensitive layer formation. The photosensitive members (B-2) and (B-3) had an abrasion loss of 9.5 mg and 6.9 mg, respectively.

As is evident from Table 1, abrasion resistance of a photosensitive member was more improved with the use of any of the polyarylate resins (Resin-1) to (Resin-10) than with the use of any of the polyarylate resins (Resin-B1), (Resin-B2), and (Resin-B4). Therefore, it is evident that abrasion resistance of a photosensitive member is improved with use of the polyarylate resin contained in the photosensitive layer of the photosensitive member according to the present invention.

As is evident from Table 1, the photosensitive member according to the embodiment (photosensitive members (A-1) to (A-18)) had less abrasion loss than the photosensitive members (B-2) and (B-3) in the abrasion resistance test. Consequently, it is evident that the photosensitive member according to the present invention is excellent in abrasion resistance.

As show in Table 1, the charge transport layers of the photosensitive members (A-10), (A-16), and (A-17) contained the polyarylate resins (Resin-2), (Resin-8), and (Resin-9), respectively as a binder resin. The polyarylate resins (Resin-2), (Resin-8), and (Resin-9) were each a polyarylate resin represented by general formula (1) in which s/(s + u) is at least 0.30 and no greater than 0.70. As shown in Table 1, the photosensitive members (A-10), (A-16), and (A-17) had an abrasion loss of at least 4.1 mg and no greater than 4.7 mg.

As shown in Table 1, the charge transport layers of the photosensitive members (A-14), (A-15), and (A-18) contained the polyarylate resins (Resin-6), (Resin-7), and (Resin-10), respectively, as a binder resin. The polyarylate resins (Resin-6), (Resin-7), and (Resin-10) were each a polyarylate resin represented by general formula (1) in which s/(s + u) was less than 0.30 or greater than 0.70. As shown in Table 1, the photosensitive members (A-15) and (A-18) had an abrasion loss of at least 5.3 mg and no greater than 5.8 mg.

As is evident from Table 1, abrasion resistance of a photosensitive member was more improved with the use of any of the polyarylate resins (Resin-2), (Resin-8), and (Resin-9) than with the use of any of the polyarylate resins (Resin-6), (Resin-7), and (Resin-10). Consequently, it is clear that abrasion resistance of a photosensitive member is further improved with use of the polyarylate resin represented by general formula (1) in which s/(s + u) is at least 0.30 and no greater than 0.70.

As is evident from Table 1, the photosensitive members (A-10), (A-16), and (A-17) are more excellent in abrasion resistance than the photosensitive members (A-14), (A-15), and (A-18).

As shown in Table 1, the charge transport layers of the photosensitive members (A-1), (A-10), (A-11), and (A-13) contained the polyarylate resins (Resin-1) to (Resin-3) and (Resin-5), respectively, as a binder resin. The polyarylate resins (Resin-1) to (Resin-3) and (Resin-5) were each a polyarylate resin represented by general formula (1) in which s represents an integer of at least 1 and X represents a divalent group represented by chemical formula (2A) or a polyarylate resin represented by general formula (1) in which s represents an integer of at least 1 and Y represents a divalent group represented by chemical formula (4A). The photosensitive members (A-1), (A-10), (A-11), and (A-13) had an abrasion loss of 4.3 mg, 4.3 mg, 4.2 mg, and 4.3 mg, respectively.

As shown in Table 1, the charge transport layers of the photosensitive members (A-12) and (A-14) contained the polyarylate resins (Resin-4) and (Resin-6), respectively, as a binder resin. The polyarylate resins (Resin-4) and (Resin-6) were neither a polyarylate resin represented by general formula (1) in which s represents an integer of at least 1 and X represents a divalent group represented by chemical formula (2A) nor a polyarylate resin represented by general formula (1) in which s represents an integer of at least 1 and Y represents a divalent group represented by chemical formula (4A). The photosensitive members (A-12) and (A-14) had an abrasion loss of 4.9 mg and 5.8 mg, respectively.

As is evident from Table 1, abrasion resistance of a photosensitive member was more improved with the use of any of the polyarylate resins (Resin-1) to (Resin-3) and (Resin-5) than with the use of any of the polyarylate resins (Resin-4) and (Resin-6). Consequently, it is clear that abrasion resistance of a photosensitive member is further improved with use of a polyarylate resin represented by general formula (1) in which s represents an integer of at least 1 and X represents a divalent group represented by chemical formula (2A) or a polyarylate resin represented by general formula (1) in which s represents an integer of at least 1 and Y represents a divalent group represented by chemical formula (4A).

As is evident from Table 1, the photosensitive members (A-1), (A-10), (A-11), and (A-13) are more excellent in abrasion resistance than the photosensitive members (A-12) and (A-14).

As shown in Table 1, the charge transport layers of the photosensitive members (A-8) and (A-9) contained the hole transport materials (HTM-8) and (HTM-9), respectively. The hole transport materials (HTM-8) and (HTM-9) are represented by general formula (4). The photosensitive members (A-8) and (A-9) had an abrasion loss of 4.0 mg and 3.9 mg, respectively.

As shown in Table 1, the charge transport layers of the photosensitive members (A-1) to (A-7) contained the hole transport materials (HTM-1) to (HTM-7), respectively. The hole transport materials (HTM-1) to (HTM-4) are represented by general formula (2). The hole transport materials (HTM-5) to (HTM-7) are represented by general formula (3). The photosensitive members (A-1) and (A-7) had an abrasion loss of at least 4.1 mg and no greater than 4.6 mg.

As is evident from Table 1, the photosensitive members (A-8) and (A-9) are more excellent in abrasion resistance than the photosensitive members (A-1) to (A-7).

As shown in Table 1, the charge transport layers of the photosensitive members (A-1) to (A-7) contained the hole transport materials (HTM-1) to (HTM-7), respectively. The hole transport materials (HTM-1) to (HTM-4) are represented by general formula (2). The hole transport materials (HTM-5) to (HTM-7) are represented by general formula (3). The photosensitive members (A-1) to (A-7) had a post-exposure potential of at least -58 V and no greater than -33 V

As shown in Table1, the charge transport layers of the photosensitive members (A-8) and (A-9) contained the hole transport materials (HTM-8) and (HTM-9), respectively. The hole transport materials (HTM-8) and (HTM-9) are represented by general formula (4). The photosensitive members (A-8) and (A-9) had a post-exposure potential of -89 V and -65 V, respectively.

As is evident from Table 1, the photosensitive members (A-1) to (A-7) are more excellent in abrasion resistance than the photosensitive members (A-8) and (A-9).

### [INDUSTRIAL APPLICABILITY]

The electrophotographic photosensitive member according to the present invention is usable for an image forming apparatus such as a multifunction peripheral.

## Claims

1. An electrophotographic photosensitive member comprising a conducive substrate and a photosensitive layer, wherein
the photosensitive layer contains a charge generating material, a hole transport material, and a binder resin, and
the binder resin includes a polyarylate resin represented by general formula (1) shown below, 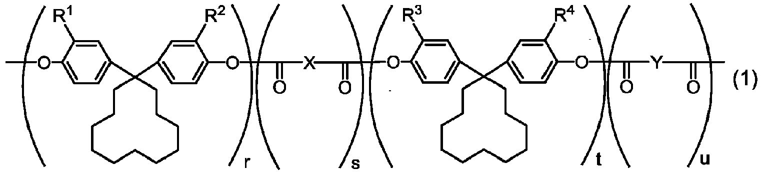 where in the general formula (1),
R¹, R², R³, and R⁴ each represent, independently of one another, a hydrogen atom or a methyl group,
r and s each represent an integer of at least 0 and no greater than 49,
t and u each represent an integer of at least 1 and no greater than 50,
r + s + t + u =100,
r + t = s + u,
r and t may be the same as or different from each other,
s and u may be the same as or different from each other,
X represents a divalent group represented by chemical formula (2A), chemical formula (2B), chemical formula (2C), or chemical formula (2D) shown below,
Y represents a divalent group represented by chemical formula (4A), chemical formula (4B), or chemical formula (4C) shown below, and
X and Y are different from each other:

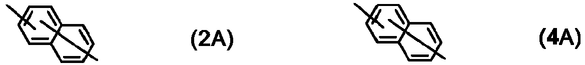

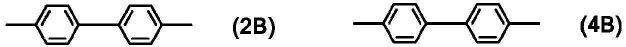

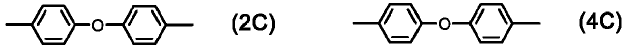

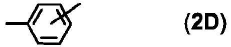

2. The electrophotographic photosensitive member according to claim 1, wherein
the hole transport material includes a compound represented by general formula (2), general formula (3), or general formula (4) shown below: 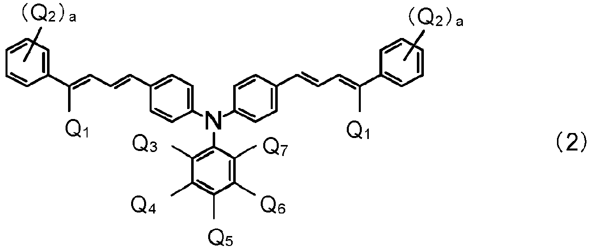 where in the general formula (2),
Q₁ represents a hydrogen atom, an alkyl group having a carbon number of at least 1 and no greater than 8, an alkoxy group having a carbon number of at least 1 and no greater than 8, or a phenyl group, the phenyl group optionally having an alkyl group having a carbon number of at least 1 and no greater than 8,
Q₂ represents an alkyl group having a carbon number of at least 1 and no greater than 8, an alkoxy group having a carbon number of at least 1 and no greater than 8, or a phenyl group,
Q₃, Q₄, Q₅, Q₆, and Q₇ each represent, independently of one another, a hydrogen atom, an alkyl group having a carbon number of at least 1 and no greater than 8, an alkoxy group having a carbon number of at least 1 and no greater than 8, or a phenyl group,
two adjacent chemical groups among Q₃, Q₄, Q₅, Q₆, and Q₇ may be bonded together to form a ring,
two chemical groups Q₁ may be the same as or different from each other, and
a represents an integer of at least 0 and no greater than 5, and
when a represents an integer of at least 2 and no greater than 5, plural chemical groups Q₂ bonded to a single phenyl group may be the same as or different from each other, 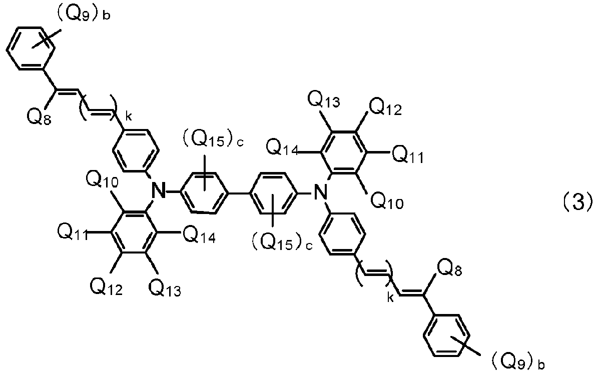 in the general formula (3),
Q₈, Q₁₀, Q₁₁, Q₁₂, Q₁₃, and Q₁₄ each represent, independently of one another, a hydrogen atom, an alkyl group having a carbon number of at least 1 and no greater than 8, an alkoxy group having a carbon number of at least 1 and no greater than 8, or a phenyl group,
Q₉ and Q₁₅ each represent, independently of one another, an alkyl group having a carbon number of at least 1 and no greater than 8, an alkoxy group having a carbon number of at least 1 and no greater than 8, or a phenyl group,
b represents an integer of at least 0 and no greater than 5,
when b represents an integer of at least 2 and no greater than 5, plural chemical groups Q₉ bonded to a single phenyl group may be the same as or different from each other,
c represents an integer of at least 0 and no greater than 4,
when c represents an integer of at least 2 and no greater than 4, plural chemical groups Q₁₅ bonded to a single phenylene group may be the same as or different from each other, and
k represents 0 or 1, and 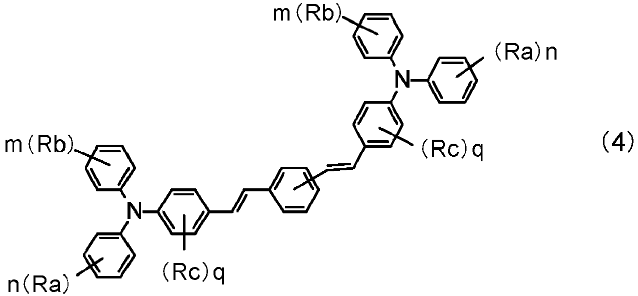 in the general formula (4),
Rₐ, R_{b}, and R_{c} each represent, independently of one another, an alkyl group having a carbon number of at least 1 and no greater than 8, a phenyl group, or an alkoxy group having a carbon number of at least 1 and no greater than 8,
q represents a integer of at least 0 and no greater than 4,
when q represents an integer of at least 2 and no greater than 4, plural chemical groups R_{c} bonded to a single phenylene group may be the same as or different from each other,
m and n each represent, independently of one another, an integer of at least 0 and no greater than 5,
when m represents an integer of at least 2 and no greater than 5, plural chemical groups R_{b} bonded to a single phenyl group may be the same as or different from each other, and
when n represents an integer of at least 2 and no greater than 5, plural chemical groups Rₐ bonded to a single phenyl group may be the same as or different from each other.

3. The electrophotographic photosensitive member according to claim 2, wherein
in the general formula (2),
Q₁ represents a hydrogen atom or a phenyl group having an alkyl group having a carbon number of at least 1 and no greater than 8,
Q₂ represents an alkyl group having a carbon number of at least 1 and no greater than 8,
Q₃, Q₄, Q₅, Q₆, and Q₇ each represent, independently of one another, a hydrogen atom, an alkyl group having a carbon number of at least 1 and no greater than 8, or an alkoxy group having a carbon number of at least 1 and no greater than 8,
two adjacent chemical groups among Q₃, Q₄, Q₅, Q₆, and Q₇ may be bonded together to form a ring, and
a represents 0 or 1,
in the general formula (3),
Q₈, Q₁₀, Q₁₁, Q₁₂, Q₁₃, and Q₁₄ each represent, independently of one another, a hydrogen atom, an alkyl group having a carbon number of at least 1 and no greater than 4, or a phenyl group, and
b and c each represent 0, and
in the general formula (4),
Rₐ and R_{b} each represent, independently of one another, an alkyl group having a carbon number of at least 1 and no greater than 8,
m and n each represent, independently of one another, an integer of at least 0 and no greater than 2, and
q represents 0.

4. The electrophotographic photosensitive member according to claim 2, wherein
the hole transport material includes the compound represented by the general formula (3) or the general formula (4) .

5. The electrophotographic photosensitive member according to claim 2, wherein
the hole transport material is represented by chemical formula (HTM-1), chemical formula (HTM-2), chemical formula (HTM-3), chemical formula (HTM-4), chemical formula (HTM-5), chemical formula (HTM-6), chemical formula (HTM-7), chemical formula (HTM-8), or chemical formula (HTM-9) shown below:

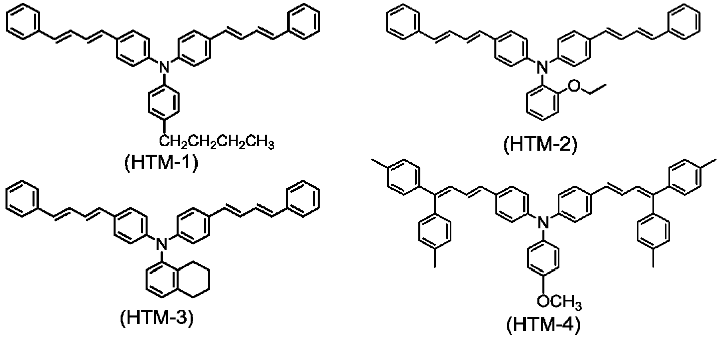

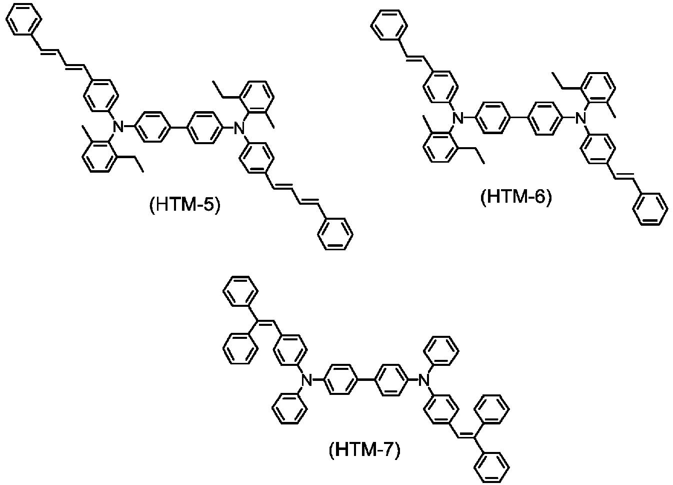

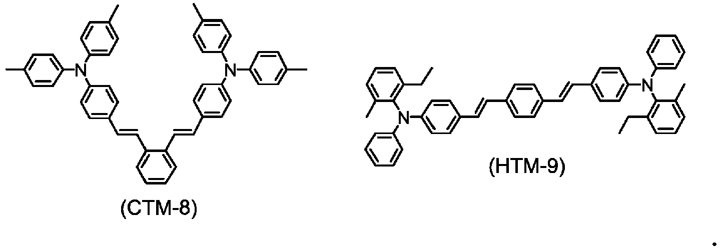

6. The electrophotographic photosensitive member according to claim 1, wherein
the photosensitive layer includes a charge generating layer that contains the charge generating material and a charge transport layer that contains the hole transport material and the binder resin, and
the charge transport layer is a single layer disposed as an outermost layer.

## Patentansprüche

1. Elektrophotographisch-Lichtempfindlich-Element, aufweisend ein leitendes Substrat und eine lichtempfindliche Schicht, wobei
die lichtempfindliche Schicht ein Ladung-Erzeugungsmaterial, ein Löcher-Transportmaterial und ein Bindemittelharz enthält, und
das Bindemittelharz ein durch die untern gezeigte allgemeine Formel 1 dargestelltes Polyarylatharz enthält, 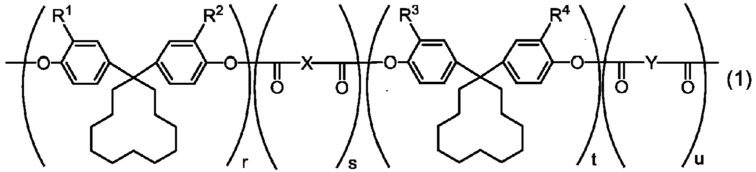 wobei in der allgemeinen Formel (1),
R¹, R², R³ und R⁴ jeweils unabhängig voneinander ein Wasserstoffatom oder eine Methylgruppe darstellen,
r und s jeweils eine ganze Zahl von mindestens 0 und höchstens 49 darstellen,
t und u jeweils eine ganze Zahl von mindestens 1 und höchstens 50 darstellen,
r+s+t+u=100,
r + t = s + u,
r und t gleich oder verschieden voneinander sein können,
s und u gleich oder verschieden voneinander sein können,
X eine zweiwertige Gruppe darstellt, die durch die unten gezeigte chemische Formel (2A), die unten gezeigte chemische Formel (2B), die unten gezeigte chemische Formel (2C) oder die unten gezeigte chemische Formel (2D) dargestellt wird,
Y eine zweiwertige Gruppe darstellt, die durch die unten gezeigte chemische Formel (4A), die unten gezeigte chemische Formel (4B) oder die unten gezeigte chemische Formel (4C) dargestellt wird, und
X und Y verschieden voneinander sind:

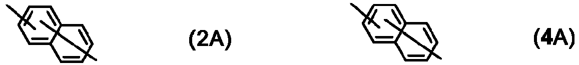

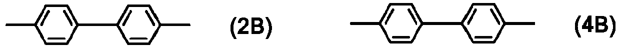

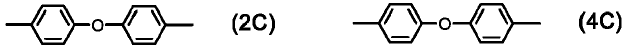

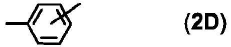

2. Elektrophotographisch-Lichtempfindlich-Element gemäß Anspruch 1, wobei
das Löcher-Transportmaterial eine Verbindung enthält, die durch die unten gezeigte allgemeine Formel (2), die unten gezeigte allgemeine Formel (3) oder die unten gezeigte allgemeine Formel (4) dargestellt ist: 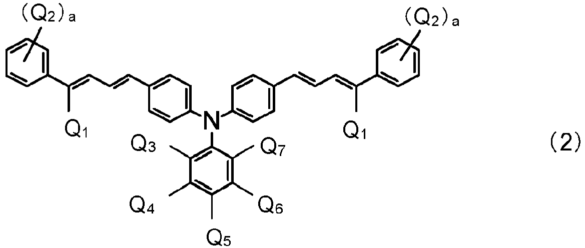 wobei in der allgemeinen Formel (2),
Q₁ ein Wasserstoffatom, eine Alkylgruppe mit einer Kohlenstoffzahl von mindestens 1 und höchstens 8, eine Alkoxygruppe mit einer Kohlenstoffzahl von mindestens 1 und höchstens 8 oder eine Phenylgruppe darstellt, wobei die Phenylgruppe gegebenenfalls eine Alkylgruppe mit einer Kohlenstoffzahl von mindestens 1 und höchstens 8 aufweist,
Q₂ eine Alkylgruppe mit einer Kohlenstoffzahl von mindestens 1 und höchstens 8, eine Alkoxygruppe mit einer Kohlenstoffzahl von mindestens 1 und höchstens 8 oder eine Phenylgruppe darstellt,
Q₃, Q₄, Q₅, Q₆ und Q₇ jeweils unabhängig voneinander ein Wasserstoffatom, eine Alkylgruppe mit einer Kohlenstoffzahl von mindestens 1 und höchstens 8, eine Alkoxygruppe mit einer Kohlenstoffzahl von mindestens 1 und höchstens 8 oder eine Phenylgruppe darstellen,
zwei benachbarte chemische Gruppen von Q₃, Q₄, Q₅, Q₆ und Q₇ miteinander verbunden sein können, um einen Ring auszubilden,
zwei chemische Gruppen Q₁ gleich oder verschieden voneinander sein können, und
a eine ganze Zahl von mindestens 0 und höchstens 5 darstellt, und
wenn a eine ganze Zahl von mindestens 2 und höchstens 5 darstellt, mehrere chemische Gruppen Q₂, die an eine einzige Phenylgruppe gebunden sind, gleich oder voneinander verschieden sein können, 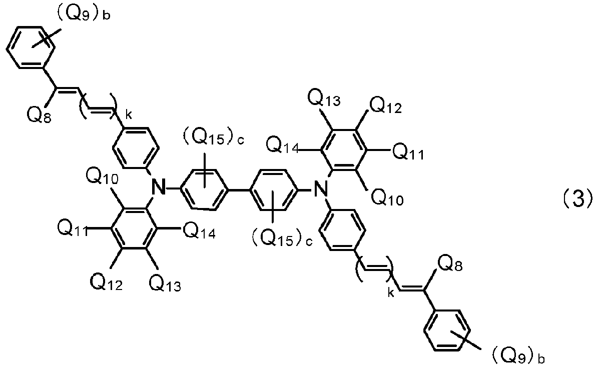 wobei in der allgemeinen Formel (3),
Q₈, Q₁₀, Q₁₁, Q₁₂, Q₁₃ und Q₁₄ jeweils unabhängig voneinander ein Wasserstoffatom, eine Alkylgruppe mit einer Kohlenstoffzahl von mindestens 1 und höchstens 8, eine Alkoxygruppe mit einer Kohlenstoffzahl von mindestens 1 und höchstens 8 oder eine Phenylgruppe darstellen,
Q₉ und Q₁₅ jeweils unabhängig voneinander eine Alkylgruppe mit einer Kohlenstoffzahl von mindestens 1 und höchstens 8, eine Alkoxygruppe mit einer Kohlenstoffzahl von mindestens 1 und höchstens 8 oder eine Phenylgruppe darstellen,
b eine ganze Zahl von mindestens 0 und höchstens 5 darstellt,
wenn b eine ganze Zahl von mindestens 2 und höchstens 5 darstellt, mehrere chemische Gruppen Q₉, die an eine einzige Phenylgruppe gebunden sind, gleich oder verschieden voneinander sein können,
c eine ganze Zahl von mindestens 0 und höchstens 4 darstellt,
wenn c eine ganze Zahl von mindestens 2 und höchstens 4 darstellt, mehrere chemische Gruppen Q₁₅, die an eine einzige Phenylengruppe gebunden sind, gleich oder verschieden voneinander sein können, und
k 0 oder 1 darstellt, 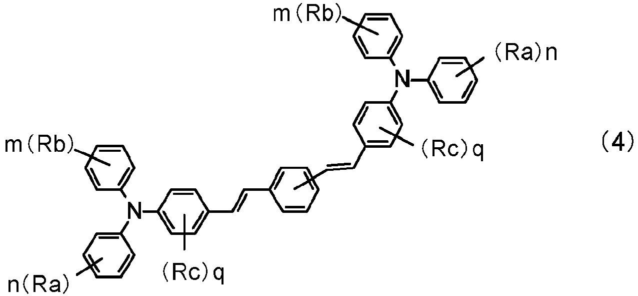 und
wobei in der allgemeinen Formel (4)
Rₐ, R_{b} und R_{c} jeweils unabhängig voneinander eine Alkylgruppe mit einer Kohlenstoffzahl von mindestens 1 und höchstens 8, eine Phenylgruppe oder eine Alkoxygruppe mit einer Kohlenstoffzahl von mindestens 1 und höchstens 8 darstellen,
q eine ganze Zahl von mindestens 0 und höchstens 4 darstellt,
wenn q eine ganze Zahl von mindestens 2 und höchstens 4 darstellt, mehrere chemische Gruppen R_{c}, die an eine einzige Phenylengruppe gebunden sind, gleich oder verschieden voneinander sein können,
m und n stellen jeweils unabhängig voneinander eine ganze Zahl von mindestens 0 und höchstens 5 dar,
wenn m eine ganze Zahl von mindestens 2 und höchstens 5 darstellt, können mehrere chemische Gruppen R_{b}, die an eine einzige Phenylengruppe gebunden sind, gleich oder voneinander verschieden sein, und
wenn n eine ganze Zahl von mindestens 2 und höchstens 5 darstellt, können mehrere chemische Gruppen Rₐ, die an eine einzige Phenylgruppe gebunden sind, gleich oder voneinander verschieden sein.

3. Elektrophotographisch-Lichtempfindlich-Element gemäß Anspruch 2,
wobei in der allgemeinen Formel (2),
Q₁ ein Wasserstoffatom oder eine Phenylgruppe mit einer Alkylgruppe mit einer Kohlenstoffzahl von mindestens 1 und höchstens 8 darstellt,
Q₂ eine Alkylgruppe mit einer Kohlenstoffzahl von mindestens 1 und höchstens 8 darstellt,
Q₃, Q₄, Q₅, Q₆ und Q₇ jeweils unabhängig voneinander ein Wasserstoffatom, eine Alkylgruppe mit einer Kohlenstoffzahl von mindestens 1 und höchstens 8 oder eine Alkoxygruppe mit einer Kohlenstoffzahl von mindestens 1 und höchstens 8 darstellen,
zwei benachbarte chemische Gruppen von Q₃, Q₄, Q₅, Q₆ und Q₇ miteinander verbunden sein können, um einen Ring auszubilden, und
a 0 oder 1 darstellt,
wobei in der allgemeinen Formel (3),
Q₈, Q₁₀, Q₁₁, Q₁₂, Q₁₃ und Q₁₄ jeweils unabhängig voneinander ein Wasserstoffatom, eine Alkylgruppe mit einer Kohlenstoffzahl von mindestens 1 und höchstens 4 oder eine Phenylgruppe darstellen, und
b und c jeweils 0 darstellen, und,
wobei in der allgemeinen Formel (4),
Rₐ und R_{b} jeweils unabhängig voneinander eine Alkylgruppe mit einer Kohlenstoffzahl von mindestens 1 und höchstens 8 darstellen,
m und n jeweils unabhängig voneinander eine ganze Zahl von mindestens 0 und höchstens 2 darstellen, und
q 0 darstellt.

4. Elektrophotographisch-Lichtempfindlich-Element gemäß Anspruch 2, wobei
das Löcher-Transportmaterial die durch die allgemeine Formel (3) oder die allgemeine Formel (4) dargestellte Verbindung enthält.

5. Elektrophotographisch-Lichtempfindlich-Element gemäß Anspruch 2, wobei
das Löcher-Transportmaterial durch die unten gezeigte chemische Formel (HTM-1), die unten gezeigte chemische Formel (HTM-2), die unten gezeigte chemische Formel (HTM-3), die unten gezeigte chemische Formel (HTM-4), die unten gezeigte chemische Formel (HTM-5), die unten gezeigte chemische Formel (HTM-6), die unten gezeigte chemische Formel (HTM-7), die unten gezeigte chemische Formel (HTM-8) oder die unten gezeigte chemische Formel (HTM-9) dargestellt wird:

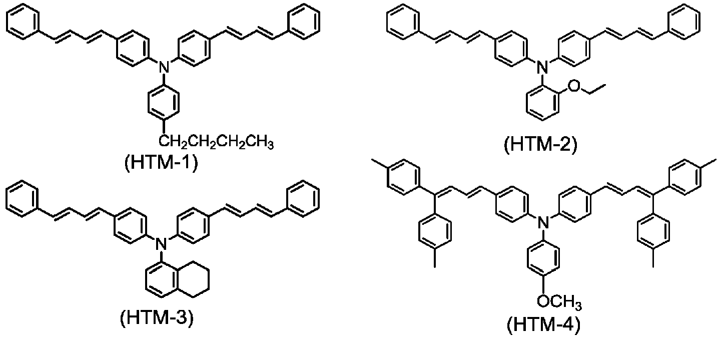

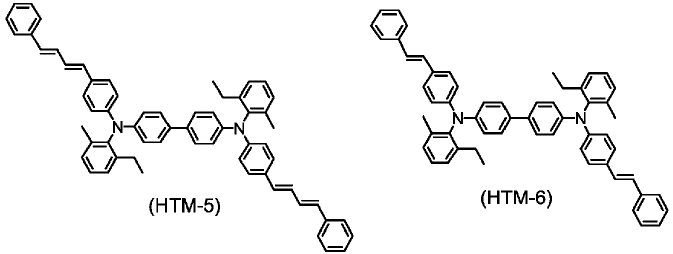

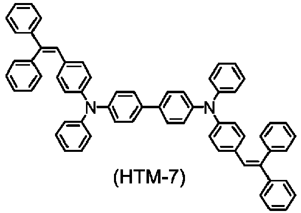

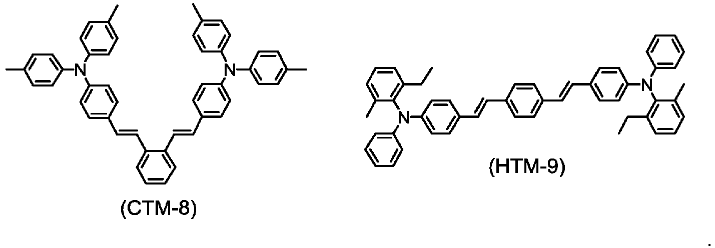

6. Elektrophotographisch-Lichtempfindlich-Element gemäß Anspruch 1, wobei
die lichtempfindliche Schicht eine Ladung-Erzeugungsschicht, die das Ladung-Erzeugungsmaterial enthält, und eine Ladung-Transportschicht, die das Löcher-Transportmaterial und das Bindemittelharz enthält, aufweist, und
die Ladung-Transportschicht eine Einzel-Schicht ist, die als äußerste Schicht angeordnet ist.

## Revendications

1. Elément photosensible électrophotographique comprenant un substrat conducteur et une couche photosensible, dans lequel
la couche photosensible contient un matériau générateur de charges, un matériau de transport de trous et une résine liante, et
la résine liante comprend une résine de polyarylate représentée par la formule générale (1) indiquée ci-dessous, 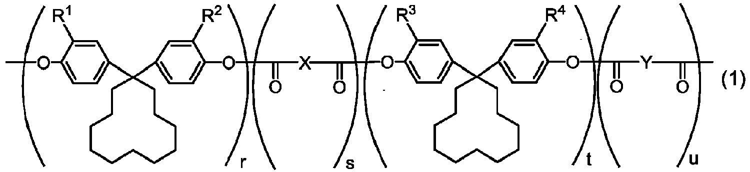 où dans la formule générale (1),
R¹, R², R³et R⁴ représentent chacun, indépendamment les uns des autres, un atome d'hydrogène ou un groupe méthyle,
r et s représentent chacun un nombre entier d'au moins 0 et non supérieur à 49,
t et u représentent chacun un nombre entier d'au moins 1 et non supérieur à 50,
r + s + t + u = 100,
r + t = s + u,
r et t peuvent être identiques l'un à l'autre ou différents l'un de l'autre,
s et u peuvent être identiques l'un à l'autre ou différents l'un de l'autre,
X représente un groupe divalent représenté par la formule chimique (2A), la formule chimique (2B), la formule chimique (2C) ou la formule chimique (2D) présentées ci-dessous,
Y représente un groupe divalent représenté par la formule chimique (4A), la formule chimique (4B) ou la formule chimique (4C) présentées ci-dessous, et
X et Y sont différents l'un de l'autre :

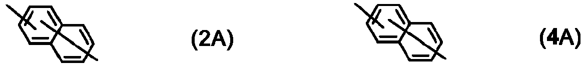

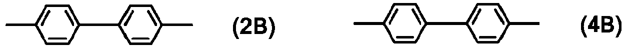

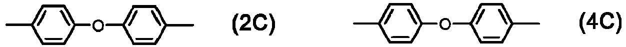

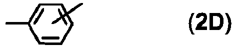

2. Élément photosensible électrophotographique selon la revendication 1, dans lequel
le matériau de transport de trous comprend un composé représenté par la formule générale (2), la formule générale (3) ou la formule générale (4) présentées ci-dessous : 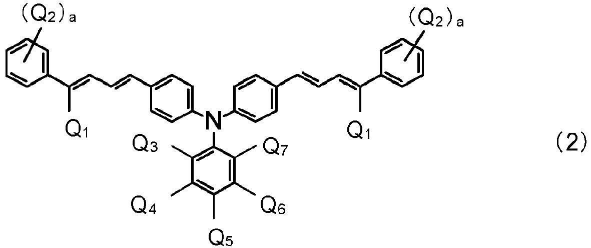 où dans la formule générale (2),
Q₁ représente un atome d'hydrogène, un groupe alkyle ayant un nombre de carbones d'au moins 1 et non supérieur à 8, un groupe alcoxy ayant un nombre de carbones d'au moins 1 et non supérieur à 8, ou un groupe phényle, le groupe phényle ayant facultativement un groupe alkyle ayant un nombre de carbones d'au moins 1 et non supérieur à 8,
Q₂ représente un groupe alkyle ayant un nombre de carbones d'au moins 1 et non supérieur à 8, un groupe alcoxy ayant un nombre de carbones d'au moins 1 et non supérieur à 8, ou un groupe phényle,
Q₃, Q₄, Q₅, Q₆ et Q₇ représentent chacun, indépendamment les uns des autres, un atome d'hydrogène, un groupe alkyle ayant un nombre de carbones d'au moins 1 et non supérieur à 8, un groupe alcoxy ayant un nombre de carbones d'au moins 1 et non supérieur à 8, ou un groupe phényle,
deux groupes chimiques adjacents parmi Q₃, Q₄, Q₅, Q₆et Q₇ peuvent être liés ensemble pour former un cycle,
deux groupes chimiques Q₁ peuvent être identiques l'un à l'autre ou différents l'un de l'autre, et
a représente un nombre entier d'au moins 0 et non supérieur à 5, et
lorsque a représente un nombre entier d'au moins 2 et non supérieur à 5, plusieurs groupes chimiques Q₂ liés à un seul groupe phényle peuvent être identiques les uns aux autres ou différents les uns des autres, 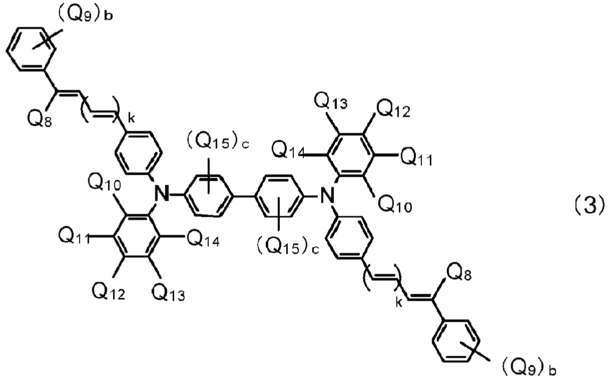 dans la formule générale (3),
Q₈, Q₁₀, Q₁₁, Q₁₂, Q₁₃ et Q₁₄ représentent chacun, indépendamment les uns des autres, un atome d'hydrogène, un groupe alkyle ayant un nombre de carbones d'au moins 1 et non supérieur à 8, un groupe alcoxy ayant un nombre de carbones d'au moins 1 et non supérieur à 8, ou un groupe phényle,
Q₉ et Q₁₅ représentent chacun, indépendamment l'un de l'autre, un groupe alkyle ayant un nombre de carbones d'au moins 1 et non supérieur à 8, un groupe alcoxy ayant un nombre de carbones d'au moins 1 et non supérieur à 8, ou un groupe phényle,
b représente un nombre entier d'au moins 0 et non supérieur à 5,
lorsque b représente un nombre entier d'au moins 2 et non supérieur à 5, plusieurs groupes chimiques Q₉ liés à un seul groupe phényle peuvent être identiques les uns aux autres ou différents les uns des autres,
c représente un nombre entier d'au moins 0 et non supérieur à 4,
lorsque c représente un nombre entier d'au moins 2 et non supérieur à 4, plusieurs groupes chimiques Q15 liés à un seul groupe phénylène peuvent être identiques les uns aux autres ou différents les uns des autres, et
k représente 0 ou 1, et 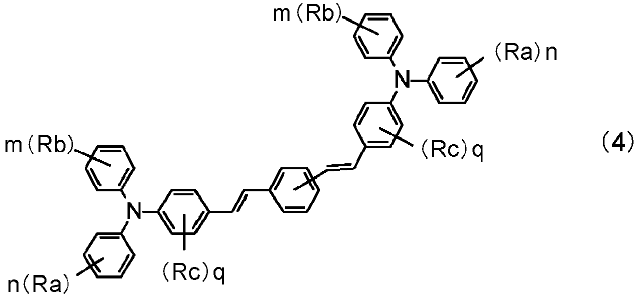 dans la formule générale (4),
Rₐ, R_{b} et R_{c} représentent chacun, indépendamment les uns des autres, un groupe alkyle ayant un nombre de carbones d'au moins 1 et non supérieur à 8, un groupe phényle ou un groupe alcoxy ayant un nombre de carbones d'au moins 1 et non supérieur à 8,
q représente un nombre entier d'au moins 0 et non supérieur à 4,
lorsque q représente un nombre entier d'au moins 2 et non supérieur à 4, plusieurs groupes chimiques R_{c} liés à un seul groupe phénylène peuvent être identiques les uns aux autres ou différents les uns des autres,
m et n représentent chacun, indépendamment l'un de l'autre, un nombre entier d'au moins 0 et non supérieur à 5,
lorsque m représente un nombre entier d'au moins 2 et non supérieur à 5, plusieurs groupes chimiques Rb liés à un seul groupe phényle peuvent être identiques les uns aux autres ou différents les uns des autres, et
lorsque n représente un nombre entier d'au moins 2 et non supérieur à 5, plusieurs groupes chimiques Rₐ liés à un seul groupe phényle peuvent être identiques les uns aux autres ou différents les uns des autres.

3. Élément photosensible électrophotographique selon la revendication 2, dans lequel
dans la formule générale (2),
Q₁ représente un atome d'hydrogène ou un groupe phényle ayant un groupe alkyle ayant un nombre de carbones d'au moins 1 et non supérieur à 8,
Q₂ représente un groupe alkyle ayant un nombre de carbones d'au moins 1 et non supérieur à 8,
Q₃, Q₄, Q₅, Q₆ et Q₇ représentent chacun, indépendamment les uns des autres, un atome d'hydrogène, un groupe alkyle ayant un nombre de carbones d'au moins 1 et non supérieur à 8, ou un groupe alcoxy ayant un nombre de carbones d'au moins 1 et non supérieur à 8,
deux groupes chimiques adjacents parmi Q₃, Q₄, Q₅, Q₆ et Q₇ peuvent être liés ensemble pour former un cycle, et
a représente 0 ou 1,
dans la formule générale (3),
Q₈, Q₁₀, Q₁₁, Q₁₂, Q₁₃ et Q₁₄ représentent chacun, indépendamment les uns des autres, un atome d'hydrogène, un groupe alkyle ayant un nombre de carbones d'au moins 1 et non supérieur à 4, ou un groupe phényle, et
b et c représentent chacun 0, et
dans la formule générale (4),
Rₐ et R_{b} représentent chacun, indépendamment l'un de l'autre, un groupe alkyle ayant un nombre de carbones d'au moins 1 et non supérieur à 8,
m et n représentent chacun, indépendamment l'un de l'autre, un nombre entier d'au moins 0 et non supérieur à 2, et
q représente 0.

4. Élément photosensible électrophotographique selon la revendication 2, dans lequel
le matériau de transport de trous comprend le composé représenté par la formule générale (3) ou la formule générale (4).

5. Élément photosensible électrophotographique selon la revendication 2, dans lequel
le matériau de transport de trous est représenté par la formule chimique (HTM-1), la formule chimique (HTM-2), la formule chimique (HTM-3), la formule chimique (HTM-4), la formule chimique (HTM-5), la formule chimique (HTM-6), la formule chimique (HTM-7), la formule chimique (HTM-8) ou la formule chimique (HTM-9) indiquées ci-dessous :

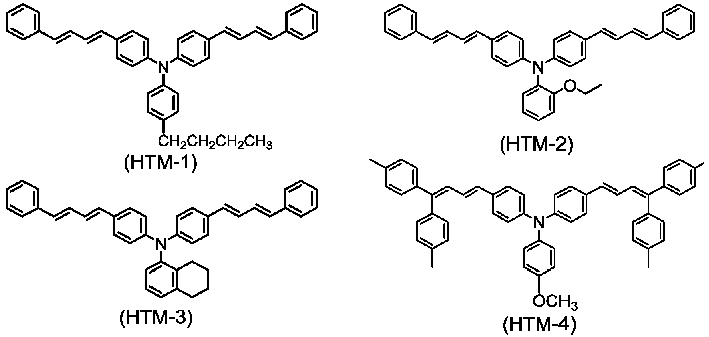

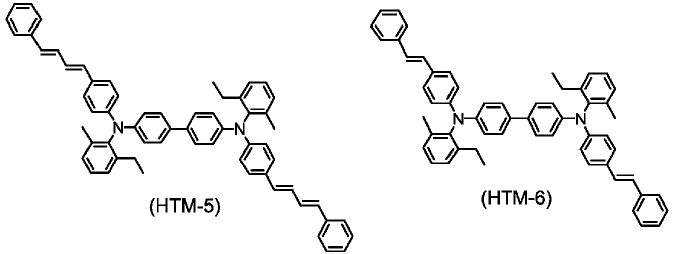

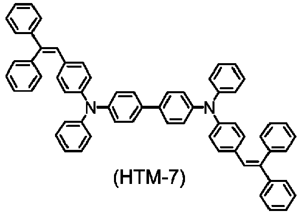

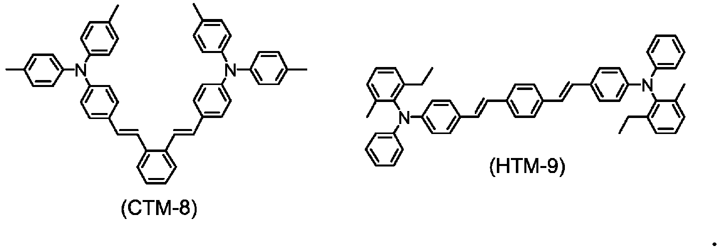

6. Élément photosensible électrophotographique selon la revendication 1, dans lequel
la couche photosensible comprend une couche génératrice de charges qui contient le matériau générateur de charges et une couche de transport de charges qui contient le matériau de transport de trous et la résine liante, et
la couche de transport de charges est une couche unique disposée comme une couche la plus extérieure.
